# EUROPEAN PATENT APPLICATION

(11) **EP 4 648 476 A1**
(43) Date of publication of application: **12.11.2025**
(21) Application number: 23925655.5
(22) Date of filing: 03.03.2023
(51) Int. Cl.: H04W 36/00

(54) **CHANNEL SWITCHING METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHOU, Pei, Dongguan, Guangdong 523860 (CN); LUO, Chaoming, Dongguan, Guangdong 523860 (CN); LU, Liuming, Dongguan, Guangdong 523860 (CN); LI, Yapu, Dongguan, Guangdong 523860 (CN)
(74) Representative: Novagraaf Technologies
(86) International application number: PCT/CN2023/079583
(87) International publication number: WO 2024/182927

(57) **Abstract**

The present application relates to the field of wireless communications. Disclosed are a channel switching method and apparatus, and a device and a storage medium. The method comprises: sending a first frame to a first station (STA) in a primary channel, wherein the first frame is used for instructing the first STA to switch from the primary channel to a first secondary channel. Therefore, the flexibility of channel switching is improved. Since the system of a first STA may be a previous legacy of an UHR device, or may be the UHR device and a subsequent new system thereof, a legacy device and a new-system device are both supported to respectively switch to a secondary channel for operating, thereby facilitating a remission in the load of a primary channel, improving a channel utilization rate, especially the utilization rate of the secondary channel, and reducing a waste of resources.

## Description

### TECHNICAL FIELD

The present disclosure relates to the field of wireless communication, and in particular, to a channel switching method and apparatus, and a device and storage medium thereof.

### RELATED ART

In related art, since devices in a basic service set (BSS) typically operate on a primary channel by default, channel interference and congestion issues are prone to occur. To address this, several channel switching methods have been proposed. However, these channel switching methods either fail to accommodate both legacy devices (e.g., those adhering to standards earlier than Wi-Fi 8) and new-standard devices (e.g., those adhering to Wi-Fi 8 and later standards), or execution of channel switching is restricted by the target wake time (TWT) service period (SP) or may cause a primary channel of the entire BSS to change, ultimately failing to effectively resolve channel interference and congestion issues.

Therefore, a channel switching method that effectively addresses channel interference and congestion issues is urgently desired.

### SUMMARY

Embodiments of the present disclosure provide a channel switching method, and apparatus, and a device and storage medium thereof. The technical solutions are as follows:

According to an aspect of the present disclosure, a channel switching method is provided. The method is performed by an access point (AP), and includes: transmitting, on a primary channel, a first frame to a first station (STA), wherein the first frame is configured to instruct the first STA to switch from the primary channel to a first secondary channel.

According to an aspect of the present disclosure, a channel switching method is provided. The method is performed by a first STA, and includes: receiving, on a primary channel, a first frame from an AP, wherein the first frame is configured to instruct the first STA to switch from the primary channel to a first secondary channel.

According to an aspect of the present disclosure, a channel switching method is provided. The method is performed by a second STA, and includes: receiving, on a primary channel, a second frame from an AP, wherein the second frame is configured to instruct the second STA to switch from the primary channel to a second secondary channel.

According to an aspect of the present disclosure, a channel switching apparatus is provided. The apparatus includes: a first transmitting module, configured to transmit, on a primary channel, a first frame to a first STA, wherein the first frame is configured to instruct the first STA to switch from the primary channel to a first secondary channel.

According to an aspect of the present disclosure, a channel switching apparatus is provided. The apparatus includes: a second receiving module, configured to receive, on a primary channel, a first frame from an AP, wherein the first frame is configured to instruct the first STA to switch from the primary channel to a first secondary channel.

According to an aspect of the present disclosure, a channel switching apparatus is provided. The apparatus includes: a third receiving module, configured to receive, on a primary channel, a second frame from an AP, wherein the second frame is configured to instruct the second STA to switch from the primary channel to a second secondary channel.

According to an aspect of the present disclosure, a wireless device is provided. The wireless device includes a processor, a transceiver connected to the processor, and a memory for storing one or more instructions executable by the processor, wherein the processor is configured to load and execute the one or more instructions to perform the channel switching method as described in the above aspects.

According to an aspect of the present disclosure, a computer-readable storage medium storing one or more executable instructions is provided. The one or more executable instructions, when loaded and executed by a processor of a computer device, cause the computer device to perform the channel switching method as described in the above aspects.

According to an aspect of the present disclosure, a computer program product including one or more computer instructions stored in a computer-readable storage medium is provided. The one or more computer instructions, when read from the computer-readable storage medium and executed by a processor of a computer device, cause the computer device to perform the channel switching method as described in the above aspects.

According to an aspect of the present disclosure, a chip including programmable logic circuitry and/or one or more program instructions. When the chip runs, the chip is configured to perform the channel switching method as described in the above aspects.

According to an aspect of the present disclosure, a computer program including one or more computer instructions. The one or more computer instructions, when loaded and executed by a processor of a computer device, cause the computer device to perform the channel switching method as described in the above aspects.

The technical solutions according to the embodiments of the present disclosure achieve at least the following beneficial effects:

The AP transmits a first frame to the first STA on the primary channel to instruct the first STA to switch from the primary channel to the first secondary channel for operation, which significantly improves the flexibility of channel switching because there is no need to change the primary channel of the entire BSS. Since the first STA is capable of operating under either a legacy standard earlier than ultra-high reliability (UHR) devices or a new standard encompassing and beyond the UHR devices, the legacy device and the new-standard device are both supported to be switched to the secondary channel and operate on the secondary channel. This is conducive to alleviating load and interference on the primary channel, improving the channel utilization rate, particularly in utilization rate of the secondary channels, and reducing the waste of resources.

### BRIEF DESCRIPTION OF DRAWINGS

For clearer illustration of the technical solutions in the embodiments of the present disclosure, the drawings required in the description of the embodiments are described hereinafter briefly. Obviously, the drawings described herein are only some of the embodiments of the present disclosure. A person of ordinary skill in the art may derive other drawings based on these drawings without any creative efforts.
FIG. 1 is a schematic diagram of a channel switching method in related art;
FIG. 2 is a schematic diagram of a format of a Channel Switch Announcement element in related art;
FIG. 3 is a schematic diagram of a format of an Extended Channel Switch Announcement element in related art;
FIG. 4 is a schematic diagram of a format of a Channel Switch Announcement frame in related art;
FIG. 5 is a schematic diagram of a format of a Secondary Channel Offset element in related art;
FIG. 6 is a schematic diagram of a format of an Extended Channel Switch Announcement frame in related art;
FIG. 7 is a schematic diagram of a Wi-Fi system according to some exemplary embodiments of the present disclosure;
FIG. 8 is a flowchart of a channel switching method according to some exemplary embodiments of the present disclosure;
FIG. 9 is a flowchart of a channel switching method according to some exemplary embodiments of the present disclosure;
FIG. 10 is a flowchart of a channel switching method according to some exemplary embodiments of the present disclosure;
FIG. 11 is a flowchart of a channel switching method according to some exemplary embodiments of the present disclosure;
FIG. 12 is a schematic diagram of a format of a Dynamic Subband Operation (DSO) frame according to some exemplary embodiments of the present disclosure;
FIG. 13 is a schematic diagram of a format of a DSO element according to some exemplary embodiments of the present disclosure;
FIG. 14 is a schematic diagram of a format of a Channel Switch Control field according to some exemplary embodiments of the present disclosure;
FIG. 15 is a schematic diagram of a channel switching method according to some exemplary embodiments of the present disclosure;
FIG. 16 is a schematic diagram of a channel switching method according to some exemplary embodiments of the present disclosure;
FIG. 17 is a schematic diagram of a format of a management frame according to some exemplary embodiments of the present disclosure;
FIG. 18 is a schematic diagram of a channel switching method according to some exemplary embodiments of the present disclosure;
FIG. 19 is a schematic diagram of a channel switching method according to some exemplary embodiments of the present disclosure;
FIG. 20 is a schematic diagram of a channel switching method according to some exemplary embodiments of the present disclosure;
FIG. 21 is a schematic diagram of a channel switching method according to some exemplary embodiments of the present disclosure;
FIG. 22 is a block diagram of a channel switching apparatus according to some exemplary embodiments of the present disclosure;
FIG. 23 is a block diagram of a channel switching apparatus according to some exemplary embodiments of the present disclosure;
FIG. 24 is a block diagram of a channel switching apparatus according to some exemplary embodiments of the present disclosure; and
FIG. 25 is a schematic structural diagram of a wireless communication device according to some exemplary embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail here, and their examples are shown in the accompanying drawings. When the following description relates to the accompanying drawings, the same numerals in different drawings represent the same or similar elements, unless otherwise indicated. The embodiments described in the following exemplary embodiments do not represent all the embodiments consistent with the present disclosure. Rather, they are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a," "an," and "the" used in the present disclosure and the appended claims are also intended to encompass their plural forms, unless the context clearly indicates otherwise. It should also be understood that the term "and/or" as used herein refers to and includes any or all possible combinations of one or more of the associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "if" as used herein may be interpreted as "when," "upon," or "in response to determining" depending on the context. In this specification, when expressing the meaning of a Boolean value, '0' represents 'first meaning,' and '1' represents 'second meaning.' Without loss of generality, those skilled in the art may understand that their represented meanings may be exchanged, i.e., '1' represents 'first meaning,' and '0' represents 'second meaning.'

Firstly, the related art involved in the embodiments of the present disclosure is described hereinafter.

### (1) Basic Service Set (BSS)

BSS is a basic topological structure of a wireless local area network (WLAN). The communication devices constituting a BSS include an access point (AP) and several stations (STAs). Upon joining a wireless domain of the AP, each of the STAs is associated with the AP. Data transmission may be performed between the STAs and the AP, and the STAs may exchange data with each other via the AP.

### (2) High Efficiency (HE) Subchannel Selective Transmission (SST)

HE SST allows an 80 MHz non-AP STA to operate on the secondary 80 MHz bandwidth of a 160 MHz operating bandwidth or a 20 MHz non-AP STA to operate on a wider bandwidth outer its primary 20 MHz bandwidth. The operation is permitted during pre-negotiated TWT SPs of an individual TWT agreement and hence, follows a semi-static pattern. DL or trigger-based UL may occur within the TWT SPs.

In the TWT mechanism, a schedule (negotiated between the STA and the AP) is established between the STA and the AP, which consists of TWT SPs. When the SP negotiated between the STA and the AP arrives, the STA wakes up and performs data exchange. Upon completion of the data transmission, the STA returns to a sleep state. Each of the STAs may independently negotiate an SP with the AP, and may have an individual TWT SP.

In summary, HE SST allows an AP and an STA to negotiate a TWT SP, during which the AP and the STA may communicate over a secondary channel. However, SST imposes restrictions on usage of the secondary channel. For example, the primary channel shall not be in a busy state while the secondary channel is used, and only downlink or trigger-based uplink communication is allowed within the SP.

### (3) Dynamic Subband Operation (DSO)

Related technologies of DSO allow data transmission between an AP and an STA to be conducted in units of transmission opportunities (TXOPs). The AP schedules the STA to operate on one or more secondary channels by transmitting a control frame on the primary channel, and the AP and the STA may perform uplink and/or downlink transmission on the secondary channels.

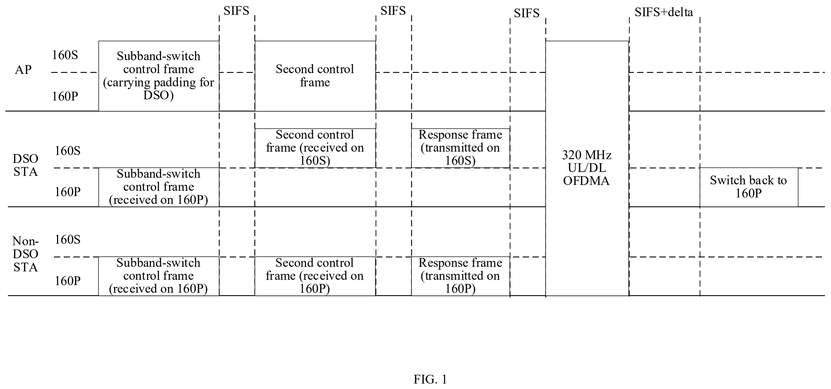

As illustrated in FIG. 1, the AP transmits an indication to a DSO-capable non-AP STA at the beginning of any 320 MHz TXOP requiring the non-AP STA to transition to the secondary 160 MHz bandwidth for this TXOP and then continues the frame exchange on the secondary 160 MHz bandwidth. The specific steps are as follows:
- The AP transmits to the DSO non-AP STA being scheduled, a "subband-switch control frame," which is a special initial control frame (could be a modified multiuser request-to-send (MU-RTS) frame or a buffer status report polling (BSRP) frame or a newly defined frame) that indicates transition to the secondary 160 MHz bandwidth.
- The subband-switch control frame has sufficient padding to cover subband switch latency (i.e., latency required by the non-AP STA to switch from the primary 160 MHz bandwidth to the secondary 160 MHz bandwidth).

Depending on the negotiated capabilities of the DSO-capable non-AP STA, the following options are possible:
Option 1: The subband-switch initial control frame is used only for subband switch by DSO non-AP STAs and does not elicit any response. After a short interframe space (SIFS), the AP transmits a second control frame (which may be a regular MU-RTS/BSRP frame) that elicits a response in the secondary 160 MHz bandwidth.
Option 2: The subband-switch initial control frame is used for subband switch by DSO non-AP STAs and elicits a response in the secondary 160 MHz bandwidth.

The subband-switch initial control frame may be in non-high throughput (non-HT) duplicate format, again depending on the negotiated capabilities. Thereafter, the DSO TXOP may contain a plurality of SIFS-spaced DL/triggered UL exchanges with the DSO non-AP STAs. At the end of the TXOP (for example, detected through a gap of SIFS+delta time), the DSO non-AP STA switches back to operating on the primary 160 MHz.

It should be noted that the embodiment in FIG. 1 schematically illustrates the operating mode of DSO. Based on the principle of FIG. 1, DSO is not limited to being executed on two 160 MHz subbands formed in a 320 MHz bandwidth. FIG. 1 does not constitute a limitation on the operating mode or scenario of DSO.

### (4) Channel Switching Methods

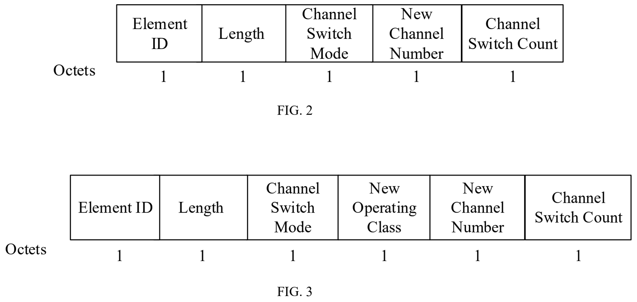

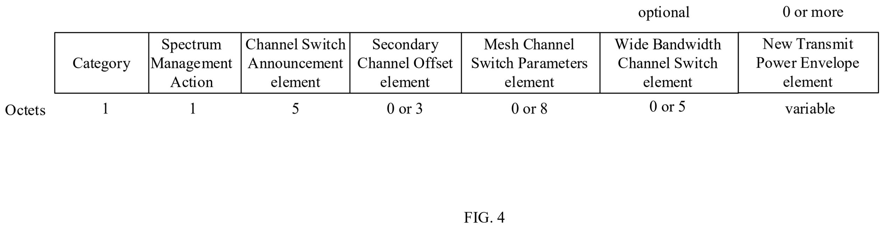

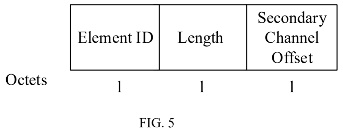

APs and STAs in the related art support the following channel switching methods:
1) The AP transmits a frame carrying a Channel Switch Announcement element/Extended Channel Switch Announcement element, such as a Beacon frame, Probe Response frame, Channel Switch Announcement frame, Extended Channel Switch Announcement frame, etc., to inform the STA to switch from the primary channel to other channels.
   a) The format of the Channel Switch Announcement element is shown in FIG. 2, where the number below each field indicates the number of octets of the field.
      - The Channel Switch Mode field indicates any restrictions on transmission until a channel switch. A non-directional multi-gigabit (non-DMG) AP or non-DMG independent BSS (IBSS) STA sets the Channel Switch Mode field to either 0 or 1 on transmission. In a case where a non-DMG STA in a BSS that is not an IBSS receives a Channel Switch Model field that takes the value 1, the non-DMG STA shall not transmit any more frames on the channel until the scheduled channel switch occurs. An IBSS STA may treat a Channel Switch Mode field equal to 1 as advisory. A Channel Switch Mode field equal to 0 does not impose any requirement on the STA that receives the Channel Switch Announcement frame.
      - The New Channel Number field is set to the number of the channel to which the STA is moving.
      - For non-mesh STAs, the Channel Switch Count field is set to the number of target beacon transmission times (TBTTs) until the STA transmitting the Channel Switch Announcement element switches to the new channel. The value 1 indicates that the switch occurs at the next TBTT (the ensuring Beacon frame is created assuming the new channel), and the value 0 indicates that the switch occurs at any time subsequent to transmitting the frame containing the element.
   b) The format of the Extended Channel Switch Announcement element is shown in FIG. 3, wherein the number below each field indicates the number of octets of the field. In the element:
      - The Channel Switch Mode field, New Channel Number field, and Channel Switch Count field are consistent with those in the Channel Switch Announcement element.
      - The New Operating Class field is set to the number of the operating class after the channel switch. The operating class value is an index into sets of values for radio operation in a regulatory domain. An operating class value indicates:
         frequencies corresponding to channel numbers;
         channel center frequencies that may be used;
         a maximum channel width that may be used; and
         behavioral constraints.
2) The AP transmits a Channel Switch Announcement frame/Extended Channel Switch Announcement frame to inform the STA to switch from the primary channel to other channels.
   c) The format of the Channel Switch Announcement frame is shown in FIG. 4, where the number below each field indicates the number of octets of the field. In the frame:
   - The Category field is set to 0, indicating that the frame belongs to Action frames of the Spectrum Management type.
   - The Spectrum Management Action field is set to 4, indicating that the frame is a Channel Switch Announcement frame.
   - The details of the Channel Switch Announcement element are as described in the previous text.
   - The format of the Secondary Channel Offset element is shown in FIG. 5, where the number below each field indicates the number of octets of the field.

The Secondary Channel Offset element is present when switching to a 40 MHz or wider channel. The Secondary Channel Offset element may be present when switching to a 20 MHz channel.

The Secondary Channel Offset field in the Secondary Channel Offset element represents the position of the secondary channel relative to the primary channel. The meaning of the values of the Secondary Channel Offset field are shown in Table 1 hereinafter.

**Table 1 Meaning of values of Secondary Channel Offset Field**

| Value | Name | Description |
|---|---|---|
| 0 | No Secondary Channel (SCN) | Indicates that no secondary channel is present |
| 1 | Secondary Channel Above (SCA) | Indicates that the secondary channel is above the primary channel |
| 2 | - | Reserved |
| 3 | Secondary Channel Below (SCB) | Indicates that the secondary channel is below the primary channel |
| 4-255 | - | Reserved |

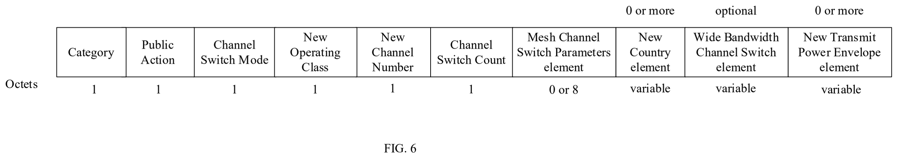

d) The format of the Extended Channel Switch Announcement frame is shown in FIG. 6, where the number below each field indicates the number of octets of the field.
- The Category field is set to 0, indicating that the frame belongs to Action frames of the Spectrum Management type.
- The Public Action field is set to 4, indicating that the frame is an Extended Channel Switch Announcement frame.
- The Channel Switch Mode field, New Operating Class field, New Channel Number field, and Channel Switch Count field are consistent with those as described in the previous text.
- The Mesh Channel Switch Parameters element is present when a mesh STA performs mesh BSS (MBSS) channel switching. The Mesh Channel Switch Parameters element is not included for channel switching other than for an MBSS channel switch.
- The New Country element is present when an AP or mesh STA performs extended channel switching to a new Country, new Operating Class Table, or a changed set of operating classes relative to the contents of the Country element sent in the Beacon; otherwise, this element is not present.
- The Wide Bandwidth Channel Switch element is present when extended channel switching to a channel width wider than 40 MHz; otherwise, this element is not present.
- The each New Transmit Power Envelope element that is present is defined to have the same format as the Transmit Power Envelope element and includes a distinct value of the Local Maximum Transmit Power Unit Interpretation subfield. If present, the New Transmit Power Envelope element indicates the maximum transmit powers for the BSS for the indicated bandwidths with an indicated unit interpretation subsequent to extended channel switching.

The Address 1 field of an Extended Channel Switch Announcement frame shall be set to the broadcast address, which means that the Extended Channel Switch Announcement frame may only be transmitted via broadcast to all STAs. However, a Channel Switch Announcement frame is not limited to be transmitted via broadcast and it may also be transmitted via unicast and/or multicast.

It should be noted that, the channel switching methods mentioned in "(4) Channel Switching Methods" section allow the primary channel of the entire BSS where the AP and STAs are located to be switched. Both the timing of the switch and the information about the new channel subsequent to the switching are indicated in the aforementioned elements.

### (5) Request-to-Send (RTS)/Clear-to-Send (CTS)

To join the BSS, the STA must possess the capability to communicate with the AP. This is straightforward and logical requirement. However, an issue may arise where the STA is capable of having communication with the AP but fails to sense other STAs or to be sensed by other STAs. To avoid collisions, an STA that is sensing may set the network allocation vector (NAV) timer for a transmission when the STA senses this transmission from another STA (considered as performing virtual carrier sensing), and sense a radio frequency (RF) channel (considered as performing physical carrier sensing). In a case where a station fails to sense other stations or to be sensed by other stations, the probability of collisions increases. The RTS/CTS mechanism helps avoid collisions by implementing NAV distribution, which reserves the medium for a data frame before transmission of the data frame begins.

However, considering that the legacy devices (e.g., those adhering to 802.11ax, 802.11ac, 802.11n, 802.11g, 802.11b, 802.11a, or 802.11be) and the new-standard devices (e.g., UHR devices) may coexist for a period, the above channel switching methods have the following deficiencies: the HE SST technology supports devices of 802.11ax and later standards under limited conditions but fails to schedule devices of earlier standards (e.g., those adhering to 802.11ac or 802.11n) to operate on the secondary channels; the DSO technology only considers how UHR and future devices use secondary channels, and fails to schedule devices of earlier standards (e.g., those adhering to 802.11ax, 802.11ac, 802.11n, 802.11g, 802.11b, 802.11a, or 802.11be) to operate on the secondary channels; and the channel switching in "(4) Channel Switching Methods" section is performed at the BSS granularity for both new-standard and legacy devices. That is, the channel switching of the entire BSS is only allowed, and individual STAs fail to be assigned or arranged flexibly to operate on different secondary channels.

Based on the aforementioned issues, the present disclosure provides a channel switching method that helps address these issues. The method supports both legacy devices (e.g., those adhering to 802.11ax, 802.11ac, 802.11n, 802.11g, 802.11b, 802.11a, or 802.11be) and new-standard devices (e.g., UHR devices) to switch to and operate on the secondary channels,. This is conducive to alleviating the load on the primary channel in scenarios with a large number of devices, and thus improving the channel utilization rate.

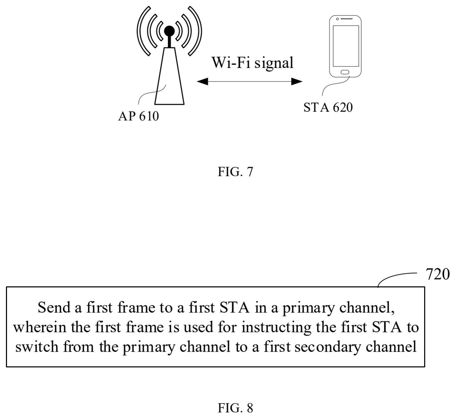

FIG. 7 is a schematic diagram of a Wi-Fi system according to some exemplary embodiments of the present disclosure. The Wi-Fi system includes a group of terminal devices, a group of terminal devices and a network device, or a group of an AP and STAs, which is not limited in the present disclosure. The present disclosure is illustrated by taking a Wi-Fi system that includes an AP 610 and an STA 620 as an example.

In some scenarios, an AP may also be referred to as an "AP STA," which means that an AP is also a type of STA in a sense. In some scenarios, an STA may also be referred to as a "non-AP STA."

In some embodiments, an STA may include an AP STA and a non-AP STA.

Communication in the Wi-Fi system may be conducted between an AP and a non-AP STA, between non-AP STAs, or between an STA and a peer STA. Herein, the peer STA may refer to a device on the opposite end of the STA that communicates with the STA. For example, the peer STA may be an AP or a non-AP STA.

The AP acts as a bridge connected between a wired network and a wireless network, and is mainly used to connect wireless network clients and access the wireless network to the Ethernet. An AP device may be a terminal device equipped with a Wi-Fi chip, or a network device equipped with a Wi-Fi chip.

It should be understood that the role of the STA in the communication system is not particularly defined. For example, in some scenarios, in a case where a mobile phone is connected to a router, the mobile phone is a non-AP STA; or in a case where the mobile phone serves as a hotspot for other phones, the mobile phone acts as an AP.

The AP and the non-AP STA may be devices applied in the Internet of vehicles (IoV), Internet of things (IoT) nodes, sensors, or other components in the IoT, smart cameras, smart remote controllers, smart water/electricity meters in smart homes, as well as sensors and similar devices in smart cities.

In some embodiments, the non-AP STA supports a plurality of current WLAN standards (such as 802.11be, 802.11ax, 802.11ac, 802.11n, 802.11g, 802.11b, and 802.11a) and future WLAN standards in the 802.11 family. The non-AP STA may also be applied in network environments supporting next-generation WLAN systems. The next-generation WLAN systems are evolved from 802.11ax systems and maintain backward compatibility with the 802.11ax systems. The next-generation Wi-Fi communication refers to any new generation Wi-Fi communication beyond Wi-Fi 7 (based on the IEEE 802.11be standard), such as extremely-high throughput (EHT) communication, or ultra-high reliability (UHR) communication. For example, a non-AP STA is a UHR STA.

In some embodiments, the AP may be a device that supports a plurality of current WLAN standards (such as 802.11be, 802.11ax, 802.11ac, 802.11n, 802.11g, 802.11b, and 802.11a) and future WLAN standards in the 802.11 family. The AP may also be applied in network environments supporting next-generation WLAN systems. The next-generation WLAN systems are evolved from 802.11ax systems and maintains backward compatibility with the 802.11ax systems. The next-generation Wi-Fi communication refers to any new generation Wi-Fi communication beyond Wi-Fi 7 (based on the IEEE 802.11be standard), such as EHT communication, or UHR communication. For example, an AP is a UHR AP.

In the embodiments of the present disclosure, the STA may include one of the following devices that support WLAN/wireless fidelity (Wi-Fi): a mobile phone, a tablet computer (e.g., pad), an e-book reader, a laptop, a desktop computer, a TV, a virtual reality (VR) device, an augmented reality (AR) device, a mediated reality (MR) device, an extended reality (XR) device, a baffle reality (BR) device, a cinematic reality (CR) device, a deceive reality (DR) device, a wireless device in industrial control, a set-top box, a wireless device in self-driving, a vehicle communication device, a wireless device in remote medical, a wireless device in smart grid, a wireless device in transportation safety, a wireless device in smart city, a wireless device in smart home, a wireless communication chip, an application-specific integrated circuit (ASIC), or a system on chip (SoC), or the like.

The Wi-Fi system in the embodiments of the present disclosure supports frequency bands, including but not limited to, low-frequency bands (e.g., 2.4 GHz, 5 GHz, or 6 GHz) and high-frequency bands (e.g., 45 GHz or 60 GHz).

One or more links may be present between an STA and an AP.

In some embodiments, the STA and the AP support multi-band communication, such as simultaneous communication in 2.4 GHz, 5 GHz, 6 GHz, as well as 45 GHz, and 60 GHz frequency bands, or simultaneous communication on different channels within the same or different frequency bands, to improve communication throughput and/or reliability between devices. Such devices are typically referred to as multi-band devices or multi-link devices (MLDs), and sometimes referred to as multi-link entities or multi-band entities. An MLD may be an AP device or an STA device. In a case where the MLD is an AP device, the MLD includes one or more APs. In a case where the MLD is an STA device, the MLD includes one or more non-AP STAs.

An MLD that includes one or more APs is referred to as an "AP." An MLD that includes one or more non-AP STAs is referred to as a "non-AP." In the embodiments of the present disclosure, a "non-AP" may be referred to as an "STA."

In some embodiments, STAs exist in the form of one or more BSSs. A BSS is a collection of STAs that may be successfully synchronized to communicate with each other. A BSS may or may not include an AP.

In some embodiments, an AP may include a plurality of APs, and a non-AP may include a plurality of STAs. A plurality of links may be formed between APs in the AP and STAs in the non-AP. Communication may be conducted between APs in the AP and their corresponding STAs in the non-AP via corresponding links.

In some embodiments, an AP is a device deployed in a WLAN/Wi-Fi system to provide wireless communication functions for STAs. An STA may be a user equipment (UE), an access terminal, a subscriber unit, a subscriber station, a mobile site, a mobile station, a remote station, a remote terminal, a mobile device, a wireless communication device, a user agent, or a user device. The STA may also be a cellular phone, a cordless phone, a Session Initiation Protocol (SIP) phone, wireless local loop (WLL) station, a personal digital assistant (PDA), a handheld device with wireless communication functions, a computing device, any other processing device connected to a wireless modem, a vehicle-mounted device, or a wearable device, which are not limited in the present disclosure.

In some embodiments, both the AP and the STA support the IEEE 802.11 standard, but are not limited thereto.

FIG. 8 is a flowchart of a channel switching method according to some exemplary embodiments of the present disclosure. In a case where the method is performed by an AP, the method includes at least a portion of the following steps:

**In step 720,** the AP transmits, on a primary channel, a first frame to a first STA, wherein the first frame is configured to instruct the first STA to switch from the primary channel to a first secondary channel.

The AP and the first STA belong to the same BSS, which includes one AP and at least one STA. The primary channel refers to the primary channel of this BSS.

The AP may be the AP 610 shown in FIG. 6, such as a UHR AP. The first STA may be the STA 620 shown in FIG. 6, and in an example, the standard of the first STA includes at least one of: 802.11ax, 802.11ac, 802.11n, 802.11g, 802.11b, 802.11a, or 802.11be. In another example, the first STA is a UHR STA. Alternatively, the standard of the first STA includes: the standard corresponding to a UHR STA or a future standard evolved therefrom.

The channels on which the AP operates include one primary channel and at least one secondary channel. The bandwidths of the primary channel and the secondary channel(s) are the same or different. The secondary channels have the same or different bandwidths.

Subsequent to establishing an association with the AP, the first STA operates on the primary channel; or, in the initial state, the first STA operates on the primary channel; or, the first STA operates on the primary channel by default; or, the first STA operates on the primary channel based on AP scheduling. Operating on the primary channel may mean that the first STA transmits at least one of a data frame, a control frame, or a management frame with the AP on the primary channel, and/or that the first STA interacts with other STAs via the AP on the primary channel, exchanging at least one of the data frame, the control frame, or the management frame. The other STA refers to an STA in the BSS other than the first STA.

The first STA is a single STA or includes at least two STAs with the same or different standards.

The first secondary channel includes at least one secondary channel on which the AP operates. In a case where the first secondary channel is a single secondary channel, the first frame is configured to instruct the first STA to switch from the primary channel to this secondary channel. That is, the first frame is configured to instruct the first STA to switch from operating on the primary channel to operating on the first secondary channel. In a case where the first secondary channel includes at least two secondary channels, the at least two secondary channels are referred to as subchannels of the first secondary channel, and the first frame is configured to instruct the first STA to switch from the primary channel to the at least two secondary channels. That is, the first frame is configured to instruct the first STA to switch from operating on the primary channel to operating on the first secondary channel formed by the at least two secondary channels. The at least two secondary channels are referred to as subchannels of the first secondary channel, and accordingly, the first secondary channel may be regarded as a combined channel that includes the at least two secondary channels. The subchannels of the first secondary channel have the same or different bandwidths.

In some embodiments, the first STA operating on the first secondary channel may mean that the first STA conducts data interaction with the AP on the first secondary channel, or that the first STA interacts with the AP on the first secondary channel, exchanging at least one of a data frame, a control frame, or a management frame.

The first frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, or a Beacon frame carrying an Extended Channel Switch Announcement element.

In some embodiments, in response to receiving the first frame, the first STA regards the first secondary channel as a new primary channel, but in fact the primary channel of the BSS at this time is still the primary channel as it was before the first STA received the first frame. In other words, the first frame enables the first STA to consider that the primary channel of the BSS has changed and regard the first secondary channel as the changed primary channel of the BBS, such that the first STA operates on the first secondary channel. However, the AP understands that the primary channel of the BSS has not changed, and the management and control of the entire BSS is still carried out on the primary channel, and the AP still regards the first secondary channel as the secondary channel of the BSS. It may also be understood that, from the perspective of the AP, the first frame is configured to instruct the first STA to switch from the primary channel to the first secondary channel, while from the perspective of the first STA, the first frame is configured to instruct the first STA to switch from the original primary channel to the new primary channel (i.e., the first secondary channel).

In summary, the method provided in the present disclosure allows the AP to transmit the first frame to the first STA on the primary channel, in order to instruct the first STA to switch from operating on the primary channel to operating on the first secondary channel, which significantly improves the flexibility of channel switching because there is no need to change the primary channel of the entire BSS. Since the first STA is capable of operating under either a legacy standard earlier than UHR devices or a new standard encompassing and beyond the UHR devices, this method supports both the legacy device and the new-standard device to switch to operate on the secondary channel, respectively. This is conductive to alleviating load and interference on the primary channel, improving the channel utilization rate, particularly in utilization rate of the secondary channels, and thus reducing the waste of resources.

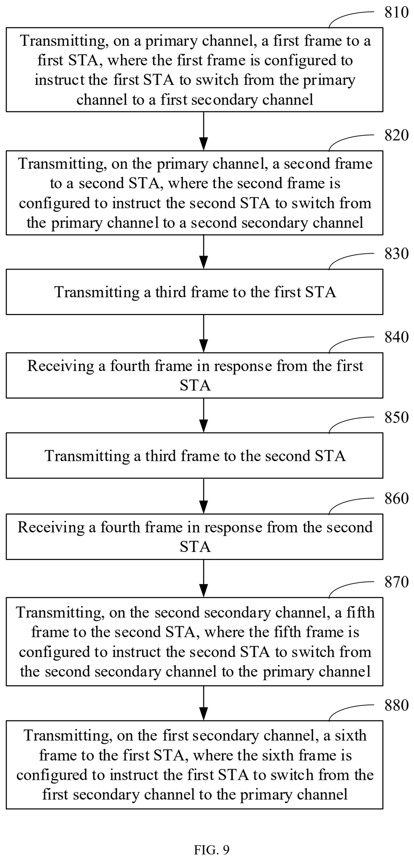

FIG. 9 is a flowchart of a channel switching method according to some exemplary embodiments of the present disclosure. In a case where the method is performed by an AP, the method includes at least a portion of the following steps:

**In step 810,** the AP transmits, on a primary channel, a first frame to a first STA, where the first frame is configured to instruct the first STA to switch from the primary channel to a first secondary channel.

The AP, first STA, and second STA all belong to the same BSS, which includes one AP and at least one STA. The primary channel refers to the primary channel of this BSS.

The AP may be the AP 610 shown in FIG. 6, such as a UHR AP. The first STA may be the STA 620 shown in FIG. 6. The second STA may be the STA 620 shown in FIG. 6.

The channels on which the AP operates include one primary channel and at least one secondary channel. The bandwidths of the primary channel and the secondary channel(s) are the same or different. The secondary channels have the same or different bandwidths.

Subsequent to establishing an association with the AP, the first STA operates on the primary channel; or, in the initial state, the first STA operates on the primary channel; or, the first STA operates on the primary channel by default; or, the first STA operates on the primary channel based on AP scheduling. Operating on the primary channel may mean that the first STA transmits at least one of a data frame, a control frame, or a management frame with the AP on the primary channel, and/or that the first STA interacts with other STAs via the AP on the primary channel, exchanging at least one of the data frame, the control frame, or the management frame. The other STA refers to an STA in the BSS other than the first STA.

The first STA is a single STA or includes at least two STAs with the same or different standards.

The first secondary channel includes at least one secondary channel on which the AP operates. In a case where the first secondary channel is a single secondary channel, the first frame is configured to instruct the first STA to switch from the primary channel to this secondary channel. That is, the first frame is configured to instruct the first STA to switch from operating on the primary channel to operating on the first secondary channel. In a case where the first secondary channel includes at least two secondary channels, the at least two secondary channels are referred to as subchannels of the first secondary channel, and the first frame is configured to instruct the first STA to switch from the primary channel to the at least two secondary channels. That is, the first frame is configured to instruct the first STA to switch from operating on the primary channel to operating on the first secondary channel formed by the at least two secondary channels. The at least two secondary channels are referred to as subchannels of the first secondary channel, and accordingly, the first secondary channel may be regarded as a combined channel that includes the at least two secondary channels. The subchannels of the first secondary channel have the same or different bandwidths.

The first frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, a Beacon frame carrying an Extended Channel Switch Announcement element, other frame carrying a Channel Switch Announcement element, or other frame carrying an Extended Channel Switch Announcement element. The other frame refers to a frame other than the Probe Response frame and the Beacon frame.

The first frame includes at least one of: a Channel Switch Mode field, a New Channel Number field, or a Channel Switch Count field.

In some embodiments, in a case where the Channel Switch Mode field is set to a first value, the Channel Switch Mode field is configured to instruct the first STA to immediately stop transmitting any frame upon receiving the first frame; or in a case where the Channel Switch Mode field is set to a second value, the Channel Switch Mode field does not impose any requirement on the first STA, which means that the Channel Switch Mode field is used to not instruct the first STA of any requirement. For example, the first value includes "1" and the second value includes **"0."**

In some embodiments, the New Channel Number field in the first frame is configured to indicate the first secondary channel, which means that the value of the New Channel Number field in the first frame is the number corresponding to the first secondary channel.

In some embodiments, in a case where the Channel Switch Count field is set to a third value, the Channel Switch Count field is configured to instruct the first STA to switch to the first secondary channel within the current TXOP in response to receiving the first frame. Alternatively, the Channel Switch Count field is configured to instruct the first STA to switch to the first secondary channel immediately upon (or on a best-effort basis) receiving the first frame. For example, the third value includes "0."

In some embodiments, the first frame is transmitted via at least one of: unicast, multicast, or broadcast.

In some embodiments, the AP receives a Probe Request frame from the first STA before performing step 810.

In some embodiments, before transmitting the first frame to the first STA, the AP obtains channel information reported by the first STA through frame exchanges with the first STA, and determines that one or more secondary channels among the reported channels are suitable as the channel(s) to which the STA will switch. That is, the AP determines, through frame exchanges with the first STA, that it is suitable for the first STA to switch to the first secondary channel. For example, the AP transmits a Spectrum Measurement Request frame to the first STA, and the first STA responds to the AP with a Spectrum Measurement Report frame. It should be understood that the Spectrum Measurement Request frame and Spectrum Measurement Report frame are provided as examples only and not as restrictions. The AP and the first STA may also exchange other frames (other than the Spectrum Measurement Request frame and Spectrum Measurement Report frame) to determine the first secondary channel. It should be understood that the step of determining the first secondary channel through frame exchanges between the AP and the first STA is optional.

In some embodiments, in response to receiving the first frame, the first STA interprets the current channel switch as a switch of the primary channel, meaning that the first STA regards the first secondary channel as a new primary channel, but in fact, the primary channel of the BSS at this time is still the primary channel as it was before the first STA received the first frame. In other words, the first frame enables the first STA to consider that the primary channel of the BSS has changed and regard the first secondary channel as the changed primary channel, such that the first STA operates on the first secondary channel. However, the AP understands that the primary channel of the BSS has not changed, and the management and control of the entire BSS is still carried out on the primary channel, and the AP still regards the first secondary channel as the secondary channel. It may also be understood that, from the perspective of the AP, the first frame is configured to instruct the first STA to switch from the primary channel to the first secondary channel, while from the perspective of the first STA, the first frame is configured to instruct the first STA to switch from the original primary channel to the new primary channel (i.e., the first secondary channel).

**In step 820,** the AP transmits, on the primary channel, a second frame to a second STA, wherein the second frame is configured to instruct the second STA to switch from the primary channel to a second secondary channel.

Subsequent to establishing an association with the AP, the second STA operates on the primary channel; or, in the initial state, the second STA operates on the primary channel; or, the second STA operates on the primary channel by default; or, the second STA operates on the primary channel based on AP scheduling. Operating on the primary channel may mean that the second STA transmits at least one of a data frame, a control frame, or a management frame with the AP on the primary channel, and/or that the second STA interacts with other STAs via the AP on the primary channel, exchanging at least one of the data frame, the control frame, or the management frame. The other STA refers to an STA in the BSS other than the second STA.

The second STA is a single STA or includes at least two STAs with the same or different standards.

The second secondary channel includes at least one secondary channel on which the AP operates. In a case where the second secondary channel is a single secondary channel, the second frame is configured to instruct the second STA to switch from the primary channel to this secondary channel. That is, the second frame is configured to instruct the second STA to switch from operating on the primary channel to operating on the second secondary channel. In a case where the second secondary channel includes at least two secondary channels, the at least two secondary channels are referred to as subchannels of the second secondary channel, and the second frame is configured to instruct the second STA to switch from the primary channel to the at least two secondary channels. That is, the second frame is configured to instruct the second STA to switch from operating on the primary channel to operating on the second secondary channel formed by the at least two secondary channels. The at least two secondary channels are referred to as subchannels of the second secondary channel, and accordingly, the second secondary channel may be regarded as a combined channel that includes the at least two secondary channels. The subchannels of the second secondary channel have the same or different bandwidths.

In some embodiments, the second STA operating on the second secondary channel may mean that the second STA conducts data interaction with the AP on the second secondary channel, or that the second STA interacts with the AP on the second secondary channel, exchanging at least one of a data frame, a control frame, or a management frame.

The second frame includes at least one of: a subband-switch control frame, an MU-RTS frame, a BSRP frame, a Beacon frame carrying a DSO element, a Probe Response frame carrying a DSO element, a Probe Response frame carrying a DSO element and a Channel Switch Announcement element, a Probe Response frame carrying a DSO element and an Extended Channel Switch Announcement element, a Beacon frame carrying a DSO element and a Channel Switch Announcement element, a Beacon frame carrying a DSO element and an Extended Channel Switch Announcement element, other frames carrying a DSO element and a Channel Switch Announcement element, or other frames carrying a DSO element and an Extended Channel Switch Announcement element. The other frames refer to frames other than the Probe Response frame and the Beacon frame.

The first secondary channel and the second secondary channel are the same; or, the first secondary channel and the second secondary channel are different; or, the first secondary channel has an overlapping portion with the second secondary channel; or, the first secondary channel is a subchannel of the second secondary channel; or, the second secondary channel is a subchannel of the first secondary channel.

In some embodiments, the standard of the first STA is different from the standard of the second STA. In some embodiments, the standard of the first STA includes at least one of: 802.11ax, 802.11ac, 802.11n, 802.11g, 802.11b, 802.11a, or 802.11be; and the standard of the second STA includes the standard corresponding to UHR STA and/or a future standard evolved from the standard corresponding to UHR STA.

In some embodiments, the standard of the first STA is the same as the standard of the second STA. In some embodiments, the standard of the first STA includes at least one of: 802.11ax, 802.11ac, 802.11n, 802.11g, 802.11b, 802.11a, 802.11be, the standard corresponding to UHR STA, or a future standard evolved from the standard corresponding to UHR STA; and the standard of the second STA includes at least one of: 802.11ax, 802.11ac, 802.11n, 802.11g, 802.11b, 802.11a, 802.11be, the standard corresponding to UHR STA, or a future standard evolved from the standard corresponding to UHR STA.

In some embodiments, in response to receiving the second frame, the second STA understands that the primary channel of the BBS remains unchanged and still regards the second secondary channel as a secondary channel. In other words, from the perspective of the AP, the second frame is configured to instruct the second STA to switch from the primary channel to the second secondary channel, and from the perspective of the second STA, the second frame is also configured to instruct the second STA to switch from the primary channel to the second secondary channel.

**In step 830,** the AP transmits a third frame to the first STA.

The third frame includes an RTS frame, an MU-RTS frame, or a Quality of Service (QoS) Null frame. The QoS Null frame is a data frame that only has a header, with an empty payload.

In some embodiments, in a case where a receiver of the third frame is an HT device and/or a very high throughput (VHT) device, the third frame includes an RTS frame; or in a case where the receiver of the third frame is at least one of: an HE device, an EHT device, or a UHR device, the third frame includes an RTS frame and/or an MU-RTS frame.

In some embodiments, step 830 may be implemented as sub-step 830a or sub-step 830b.

In sub-step 830a, the AP transmits, on the first secondary channel, the third frame to the first STA.

In some embodiments, the first frame is transmitted to the first STA on the primary channel, and after an SIFS, the third frame is transmitted to the first STA on the first secondary channel. Alternatively, the first frame is transmitted to the first STA on the primary channel, and after a first time interval, the third frame is transmitted to the first STA on the first secondary channel. The first time interval is longer than the SIFS.

In sub-step 830b, the AP transmits the third frame to the first STA via dynamic puncturing.

In some embodiments, the first frame is transmitted to the first STA on the primary channel, and after an SIFS, the third frame is transmitted to the first STA via dynamic puncturing. Alternatively, the first frame is transmitted to the first STA on the primary channel, and after a first time interval, the third frame is transmitted to the first STA via dynamic puncturing. The first time interval is longer than the SIFS.

In some embodiments, the AP transmits the third frame on all channels within the BSS (including the primary channel and secondary channels), and dynamically punctures the secondary channel(s) other than the primary channel and the first secondary channel, such that the third frame is transmitted to the first STA via dynamic puncturing.

In some embodiments, the AP dynamically punctures the secondary channel(s) other than the primary channel and the first secondary channel, and transmits the third frame to the first STA on the primary channel and the first secondary channel, such that the third frame is transmitted to the first STA via dynamic puncturing.

In some embodiments, the AP determines the interval between the transmission time of the first frame and the transmission time of the third frame based on the capabilities of the first STA.

In some embodiments, the interval between the transmission time of the first frame and the transmission time of the third frame is set by the AP and the first STA based on their respective capabilities during an initial stage of capability interaction (e.g., during a stage at which the AP establishes an association with the first STA). In a case where the first STA has strong capabilities, the interval between the transmission time of the first frame and the transmission time of the third frame is short, such as the SIFS. In a case where the first STA has weak capabilities, the interval between the transmission time of the first frame and the transmission time of the third frame is long, such as the first time interval.

In some embodiments, the interval between the transmission time of the first frame and the transmission time of the third frame is determined by the AP based on the performance of the first STA in previous channel switching. For example, in a case where the first STA required more than the first time interval to complete channel switching in a previous channel switching process, the interval between the transmission time of the first frame and the transmission time of the third frame in this instance is set to be longer than the first time interval.

**In step 840,** the AP receives a fourth frame in response from the first STA.

The fourth frame includes a CTS frame, an Acknowledgment (ACK) frame, or a Block ACK (BA) frame.

In some embodiments, in a case where the third frame is an RTS frame or an MU-RTS frame, the fourth frame is a CTS frame; or in a case where the third frame is a QoS Null frame, the fourth frame is an ACK frame or a BA frame.

In some embodiments, the AP receives the fourth frame in response from the first STA on the first secondary channel. Alternatively, the AP receives the fourth frame in response from the first STA on at least one subchannel of the first secondary channel.

The interaction between the AP and the first STA via the third frame and the fourth frame, not only enables the AP to check whether the first STA has successfully switched to the primary channel, but also allows for re-reservation of the channel on the secondary channel and elimination of the hidden terminal problem to ensure that the first STA uses the secondary channel normally.

In some embodiments, in a case where the first STA switches to the first secondary channel, since the TXOP holder of the channels within the entire wide bandwidth remains the AP itself, the AP and the first STA may also bypass the exchange of the third frame and the fourth frame.

**In step 850,** the AP transmits a third frame to the second STA.

The third frame includes an RTS frame, an MU-RTS frame, or a QoS Null frame.

In some embodiments, step 850 may be implemented as sub-step 850a or sub-step 850b.

In sub-step 850a, the AP transmits the third frame to the second STA on the second secondary channel.

In some embodiments, the second frame is transmitted to the second STA on the primary channel, and after an SIFS, the third frame is transmitted to the second STA on the second secondary channel. Alternatively, the second frame is transmitted to the second STA on the primary channel, and after a first time interval, the third frame is transmitted to the second STA on the second secondary channel. The first time interval is longer than the SIFS.

In sub-step 850b, the AP transmits the third frame to the second STA via dynamic puncturing.

In some embodiments, the second frame is transmitted to the second STA on the primary channel, and after an SIFS, the third frame is transmitted to the second STA via dynamic puncturing. Alternatively, the second frame is transmitted to the second STA on the primary channel, and after a first time interval, the third frame is transmitted to the second STA via dynamic puncturing. The first time interval is longer than the SIFS.

In some embodiments, the AP transmits the third frame on all channels within the BSS (including the primary channel and secondary channels), and dynamically punctures the secondary channels other than the primary channel and the second secondary channel, such that the third frame is transmitted to the second STA via dynamic puncturing.

In some embodiments, the AP dynamically punctures the secondary channels other than the primary channel and the second secondary channel, and transmits the third frame to the second STA on the primary channel and the second secondary channel, such that the third frame is transmitted to the second STA via dynamic puncturing.

In some embodiments, the AP determines the interval between the transmission time of the second frame and the transmission time of the third frame based on the capabilities of the second STA.

In some embodiments, the interval between the transmission time of the second frame and the transmission time of the third frame is set by the AP and the second STA based on their respective capabilities during an initial stage of capability interaction (e.g., during a stage at which the AP establishes an association with the second STA). In a case where the second STA has strong capabilities, the interval between the transmission time of the second frame and the transmission time of the third frame is short, such as the SIFS. In a case where the second STA has weak capabilities, the interval between the transmission time of the second frame and the transmission time of the third frame is long, such as the first time interval.

In some embodiments, the interval between the transmission time of the second frame and the transmission time of the third frame is determined by the AP based on the performance of the second STA in previous channel switching. For example, in a case where the second STA required more than the first time interval to complete channel switching in a previous channel switching process, the interval between the transmission time of the second frame and the transmission time of the third frame in this instance is set to be longer than the first time interval.

**In step 860,** the AP receives a fourth frame in response from the second STA.

In some embodiments, the AP receives the fourth frame in response from the second STA on the second secondary channel. Alternatively, the AP receives the fourth frame in response from the second STA on at least one subchannel of the second secondary channel.

The interaction between the AP and the second STA via the third frame and the fourth frame, not only enables the AP to check whether the second STA has successfully switched to the second secondary channel, but also allows for re-reservation of the channel on the secondary channel and elimination of the hidden terminal problem to ensure that the second STA uses the secondary channel normally.

In some embodiments, in a case where the second STA switches to the second secondary channel, since the TXOP holder of the channels within the entire wide bandwidth remains the AP itself, the AP and the second STA may also bypass the exchange of the third frame and the fourth frame.

**In step 870,** the AP transmits, on the second secondary channel, a fifth frame to the second STA, wherein the fifth frame is configured to instruct the second STA to switch from the second secondary channel to the primary channel.

The fifth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, a Beacon frame carrying an Extended Channel Switch Announcement element, other frame carrying a Channel Switch Announcement element, or other frame carrying an Extended Channel Switch Announcement element. The other frame refers to a frame other than the Probe Response frame and the Beacon frame.

In some embodiments, the fifth frame includes at least one of: a Channel Switch Mode field, a New Channel Number field, or a Channel Switch Count field.

In some embodiments, in a case where the Channel Switch Mode field is set to a first value, the Channel Switch Mode field is configured to instruct the second STA to immediately stop transmitting any frame upon receiving the fifth frame; or in a case where the Channel Switch Mode field is set to a second value, the Channel Switch Mode field does not impose any requirement on the second STA. For example, the first value includes "1" and the second value includes "0."

In some embodiments, the New Channel Number field in the fifth frame is configured to indicate the primary channel, which means that the value of the New Channel Number field in the fifth frame is the number corresponding to the primary channel.

In some embodiments, in a case where the Channel Switch Count field is set to a third value, the Channel Switch Count field is configured to instruct the second STA to switch to the primary channel within the current TXOP in response to receiving the fifth frame. Alternatively, the Channel Switch Count field is configured to instruct the second STA to switch to the primary channel immediately upon (or on a best-effort basis) receiving the fifth frame. For example, the third value includes "0."

In some embodiments, in response to receiving the fifth frame, the second STA understands that the primary channel of the BSS has not changed and still regards the second secondary channel as a secondary channel and the primary channel as the primary channel of the BSS. In other words, from the perspective of the AP, the fifth frame is configured to instruct the second STA to switch from the secondary channel to the primary channel, and from the perspective of the second STA, the second frame is also configured to instruct the second STA to switch from the secondary channel to the primary channel.

In some embodiments, the second STA automatically switches to the primary channel when a first condition is met, which helps improve the flexibility of channel switching and channel usage and reduce signaling overhead. The first condition includes at least one of: the second STA does not need to transmit any frame to the AP within a second time interval; the second STA does not intend to transmit any frame to the AP within the second time interval; the second STA does not transmit any frame to the AP within the second time interval; the AP does not need to transmit any frame to the second STA within the second time interval; the AP does not intend to transmit any frame to the second STA within the second time interval; or the AP does not transmit any frame to the second STA within the second time interval.

The second time interval includes one of:
- a default duration, such as a Priority Interframe Space (PIFS), PIFS + delta (delta > 0), or a Distributed (Coordination Function) Interframe Space (DIFS);
- a duration indicated by a DSO frame sent by the AP; or
- an end time of the current TXOP, at which point the UHR STA automatically switches back to the primary channel.

In some embodiments, delta includes the time indicated by a Channel Switch Delay field.

**In step 880,** the AP transmits, on the first secondary channel, a sixth frame to the first STA, wherein the sixth frame is configured to instruct the first STA to switch from the first secondary channel to the primary channel.

The sixth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, a Beacon frame carrying an Extended Channel Switch Announcement element, other frame carrying a Channel Switch Announcement element, or other frame carrying an Extended Channel Switch Announcement element. The other frame refers to a frame other than the Probe Response frame and the Beacon frame.

In some embodiments, the sixth frame includes at least one of: a Channel Switch Mode field, a New Channel Number field, or a Channel Switch Count field.

In some embodiments, in a case where the Channel Switch Mode field is set to a first value, the Channel Switch Mode field is configured to instruct the first STA to immediately stop transmitting any frame upon receiving the sixth frame; or in a case where the Channel Switch Mode field is set to a second value, the Channel Switch Mode field does not impose any requirement on the first STA. For example, the first value includes "1" and the second value includes "0."

In some embodiments, the New Channel Number field in the sixth frame is configured to indicate the primary channel, which means that the value of the New Channel Number field in the sixth frame is the number corresponding to the primary channel.

In some embodiments, in a case where the Channel Switch Count field is set to a third value, the Channel Switch Count field is configured to instruct the first STA to switch to the primary channel within the current TXOP in response to receiving the sixth frame. Alternatively, the Channel Switch Count field is configured to instruct the first STA to switch to the primary channel immediately upon (or on a best-effort basis) receiving the sixth frame. For example, the third value includes "0."

In some embodiments, in response to receiving the sixth frame, the first STA interprets the current channel switch as a switch of the primary channel, i.e., a switch from the current primary channel (i.e., the first secondary channel) to a new primary channel (i.e., the original primary channel), but in fact, the primary channel of the BSS at this time is still the primary channel as it was before the first STA received the sixth frame. In other words, the sixth frame enables the first STA to consider that the primary channel of the BSS has changed, and regard the first secondary channel as the primary channel of the BSS before the change and the original primary channel as the new primary channel of the BSS subsequent to the change. However, the AP understands that the primary channel of the BSS has not changed. It may also be understood that, from the perspective of the AP, the sixth frame is configured to instruct the first STA to switch from the first secondary channel to the primary channel, while from the perspective of the first STA, the sixth frame is configured to instruct the first STA to switch from the current primary channel (i.e., the first secondary channel) to a new primary channel (i.e., the original primary channel).

In some embodiments, the first STA automatically switches to the primary channel when a first condition is met, which helps improve the flexibility of channel switching and channel usage and reduce signaling overhead. The first condition includes at least one of: the first STA does not need to transmit any frame to the AP within a second time interval; the first STA does not intend to transmit any frame to the AP within the second time interval; the first STA does not transmit any frame to the AP within the second time interval; the AP does not need to transmit any frame to the first STA within the second time interval; the AP does not intend to transmit any frame to the first STA within the second time interval; or the AP does not transmit any frame to the first STA within the second time interval.

The second time interval includes one of:
- a default duration, such as a PIFS, PIFS + delta (delta > 0), or a DIFS;
- a duration indicated by a DSO frame sent by the AP; or
- an end time of the current TXOP, at which point the UHR STA automatically switches back to the primary channel.

In some embodiments, in a case where the AP acquires a long TXOP duration, some or all of the above steps may be performed within the same TXOP, resulting in a higher gain for the channel switching method provided by the present disclosure. In some embodiments, in a case where the AP acquires a short TXOP duration, some or all of the above steps are performed within a plurality of TXOPs, resulting in a lower gain for the channel switching method provided by the present disclosure.

In summary, the method according to the present disclosure supports both the legacy device and the new-standard device in switching to the secondary channel for operation respectively, as well as switching back to the primary channel for operation respectively. The flexible switching of the operating channels of the legacy and new-standard devices is enabled without changing the primary channel of the BSS. The full utilization of the large bandwidth characteristics of future UHR technology is not only conducive to alleviating the load on the primary channel but also to improving channel utilization rate, particularly the utilization rate of the secondary channel, thus reducing resource waste. Moreover, the STA is supported to switch back to the primary channel for operation, thereby avoiding situations where the STA is unable to detect control frames and/or management frames sent by the AP on the secondary channel. This ensures that the STA operates normally during the flexible switching of channels.

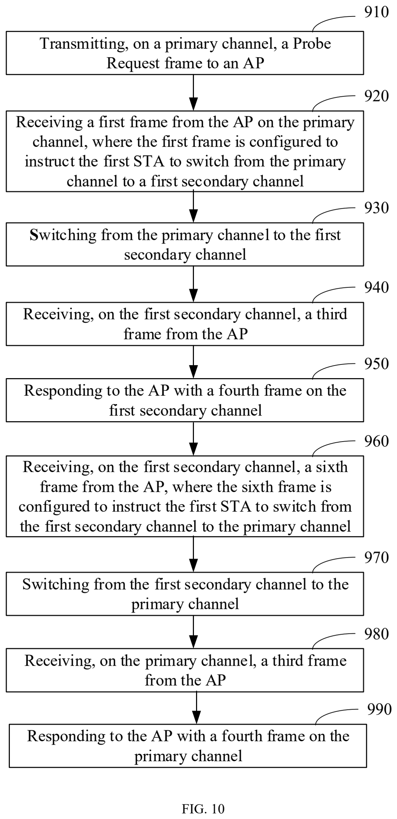

FIG. 10 is a flowchart of a channel switching method according to some exemplary embodiments of the present disclosure. In a case where the method is performed by a first STA, the method includes at least a portion of the following steps:
**In step 910,** the first STA transmits, on a primary channel, a Probe Request frame to an AP.

The AP and the first STA belong to the same BSS, which includes one AP and at least one STA. The primary channel refers to the primary channel of this BSS.

The AP may be the AP 610 shown in FIG. 6, such as a UHR AP. The first STA may be the STA 620 shown in FIG. 6.

The channels on which the AP operates include one primary channel and at least one secondary channel. The bandwidths of the primary channel and the secondary channel(s) are the same or different. The secondary channels have the same or different bandwidths.

In response to establishing an association with the AP, the first STA operates on the primary channel; or, in the initial state, the first STA operates on the primary channel; or, the first STA operates on the primary channel by default; or, the first STA operates on the primary channel based on AP scheduling. Operating on the primary channel may mean that the first STA transmits at least one of a data frame, a control frame, or a management frame with the AP on the primary channel, and/or that the first STA interacts with other STAs via the AP on the primary channel, exchanging at least one of the data frame, the control frame, or the management frame. The other STA refers to an STA in the BSS other than the first STA.

The first STA is a single STA or includes at least two STAs with the same or different standards.

In some embodiments, the standard of the first STA includes at least one of: 802.11ax, 802.11ac, 802.11n, 802.11g, 802.11b, 802.11a, 802.11be, a standard corresponding to a UHR STA, or a future standard evolved from the standard corresponding to the UHR STA.

It should be understood that step 910 is an optional step.

**In step 920,** the first STA receives a first frame from the AP on the primary channel, wherein the first frame is configured to instruct the first STA to switch from the primary channel to a first secondary channel.

The first secondary channel includes at least one secondary channel on which the AP operates. In a case where the first secondary channel is a single secondary channel, the first frame is configured to instruct the first STA to switch from the primary channel to this secondary channel. That is, the first frame is configured to instruct the first STA to switch from operating on the primary channel to operating on the first secondary channel. In a case where the first secondary channel includes at least two secondary channels, the at least two secondary channels are referred to as subchannels of the first secondary channel, and the first frame is configured to instruct the first STA to switch from the primary channel to the at least two secondary channels. That is, the first frame is configured to instruct the first STA to switch from operating on the primary channel to operating on the first secondary channel consisting of the at least two secondary channels. The at least two secondary channels are referred to as subchannels of the first secondary channel, and accordingly, the first secondary channel may be regarded as a combined channel that includes the at least two secondary channels. The subchannels of the first secondary channel have the same or different bandwidths.

The first frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, a Beacon frame carrying an Extended Channel Switch Announcement element, other frame carrying a Channel Switch Announcement element, or other frame carrying an Extended Channel Switch Announcement element. The other frame refers to a frame other than the Probe Response frame and the Beacon frame.

The first frame includes at least one of: a Channel Switch Mode field, a New Channel Number field, or a Channel Switch Count field.

In some embodiments, in a case where the Channel Switch Mode field is set to a first value, the Channel Switch Mode field is configured to instruct the first STA to immediately stop transmitting any frame upon receiving the first frame; or in a case where the Channel Switch Mode field is set to a second value, the Channel Switch Mode field does not impose any requirement on the first STA. For example, the first value includes "1" and the second value includes "0."

In some embodiments, the New Channel Number field in the first frame is configured to indicate the first secondary channel, which means that the value of the New Channel Number field in the first frame is the number corresponding to the first secondary channel.

In some embodiments, in a case where the Channel Switch Count field is set to a third value, the Channel Switch Count field is configured to instruct the first STA to switch to the first secondary channel within the current TXOP in response to receiving the first frame. Alternatively, the Channel Switch Count field is configured to instruct the first STA to switch to the first secondary channel immediately upon (or on a best-effort basis) receiving the first frame. For example, the third value includes "0."

In some embodiments, the first frame is transmitted via at least one of: unicast, multicast, or broadcast.

In some embodiments, in a case where the AP does not receive the Probe Request frame from the first STA, the AP actively transmits at least one of the following frames to the first STA:
- a unicast Probe Response frame carrying a Channel Switch Announcement element;
- a unicast Probe Response frame carrying an Extended Channel Switch Announcement element;
- a multicast Probe Response frame carrying a Channel Switch Announcement element;
- a multicast Probe Response frame carrying an Extended Channel Switch Announcement element;
- a broadcast Probe Response frame carrying a Channel Switch Announcement element; or
- a broadcast Probe Response frame carrying an Extended Channel Switch Announcement element.

In a case where the AP actively transmits a broadcast Probe Response frame, a Receiver Address (RA) field in the broadcast Probe Response frame is set to a Media Access Control (MAC) address of the first STA and/or a multicast address corresponding to the first STA and other STAs. The other STA refers to an STA in the BSS other than the first STA.

**In step 930,** the first STA switches from the primary channel to the first secondary channel.

In response to the received first frame, the first STA performs channel switching from the primary channel to the first secondary channel.

For example, the value of the New Channel Number field in the first frame is the number corresponding to the first secondary channel. In a case where the Channel Switch Mode field in the first frame is set to a first value (e.g., "1"), the first STA immediately stops transmitting any frame upon receiving the first frame, and in response to switching to the first secondary channel, the first STA transmits the frames that are pending on the primary channel before the switch. In a case where the Channel Switch Count field in the first frame is set to a third value (e.g., "0"), the first STA switches to the first secondary channel as soon as possible within the current TXOP. Depending on the capabilities of the first STA, the channel switch may be completed by the first STA in tens to serval tens of microseconds.

**In step 940,** the first STA receives, on the first secondary channel, a third frame from the AP.

The third frame includes an RTS frame, an MU-RTS frame, or a QoS Null frame.

In some embodiments, the first STA receives the first frame on the primary channel, and after an SIFS, the first STA receives the third frame on the first secondary channel. Alternatively, the first STA receives the first frame on the primary channel, and after a first time interval, the first STA receives the third frame on the first secondary channel. The first time interval is longer than the SIFS.

**In step 950,** the first STA responds to the AP with a fourth frame on the first secondary channel.

The fourth frame includes a CTS frame, an ACK frame, or a BA frame.

In some embodiments, in a case where the third frame is an RTS frame or an MU-RTS frame, the fourth frame is a CTS frame; or in a case where the third frame is a QoS Null frame, the fourth frame is an ACK frame or a BA frame.

In some embodiments, the first STA responds to the AP with the fourth frame on the first secondary channel, or the first STA responds to the AP with the fourth frame on at least one subchannel of the first secondary channel.

The interaction between the AP and the first STA via the third frame and the fourth frame, not only facilitates the AP in checking whether the first STA has successfully switched to the secondary channel, but also allows for re-reservation of the channel on the secondary channel and elimination of the hidden terminal problem to ensure that the first STA uses the secondary channel normally.

In some embodiments, in a case where the first STA switches to the first secondary channel, since the TXOP holder of the channels within the entire wide bandwidth remains the AP itself, the AP and the first STA may also bypass the exchange of the third frame and the fourth frame.

**In step 960,** the first STA receives, on the first secondary channel, a sixth frame from the AP, wherein the sixth frame is configured to instruct the first STA to switch from the first secondary channel to the primary channel.

The sixth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, a Beacon frame carrying an Extended Channel Switch Announcement element, other frame carrying a Channel Switch Announcement element, or other frame carrying an Extended Channel Switch Announcement element. The other frame refers to a frame other than the Probe Response frame and the Beacon frame.

In some embodiments, the sixth frame includes at least one of: a Channel Switch Mode field, a New Channel Number field, or a Channel Switch Count field.

In some embodiments, in a case where the Channel Switch Mode field is set to a first value, the Channel Switch Mode field is configured to instruct the first STA to immediately stop transmitting any frame upon receiving the sixth frame; or in a case where the Channel Switch Mode field is set to a second value, the Channel Switch Mode field does not impose any requirement on the first STA. For example, the first value includes "1" and the second value includes "0."

In some embodiments, the New Channel Number field in the sixth frame is configured to indicate the primary channel, which means that the value of the New Channel Number field in the sixth frame is the number corresponding to the primary channel.

In some embodiments, in a case where the Channel Switch Count field is set to a third value, the Channel Switch Count field is configured to instruct the first STA to switch to the primary channel within the current TXOP in response to receiving the sixth frame. Alternatively, the Channel Switch Count field is configured to instruct the first STA to switch to the primary channel immediately upon (or on a best-effort basis) receiving the sixth frame. For example, the third value includes "0."

**In step 970,** the first STA switches from the first secondary channel to the primary channel.

In some embodiments, the first STA switches from the first secondary channel to the primary channel based on the received sixth frame.

For example, the value of the New Channel Number field in the sixth frame is the number corresponding to the primary channel. In a case where the Channel Switch Mode field in the sixth frame is set to the second value (e.g., "0"), the AP does not impose any requirement on the switching mode of the first STA upon reception of the sixth frame by the first STA. The first STA may immediately stop transmitting any frame, and upon switching to the primary channel, the first STA transmits the frames that are pending on the first secondary channel before the switch. Alternatively, the first STA may switch to the primary channel upon completion of the current transmission. In a case where the value of the Channel Switch Count field in the first frame is a third value (e.g., "0"), the first STA switches to the primary channel as soon as possible within the current TXOP. Depending on the capabilities of the first STA, the channel switch may be completed by the first STA in tens to serval tens of microseconds.

In some embodiments, the first STA automatically switches to the primary channel when a first condition is met, which helps improve the flexibility of channel switching and channel usage and reduce signaling overhead. The first condition includes at least one of: the first STA does not need to transmit any frame to the AP within a second time interval; the first STA does not intend to transmit any frame to the AP within the second time interval; the first STA does not transmit any frame to the AP within the second time interval; the AP does not need to transmit any frame to the first STA within the second time interval; the AP does not intend to transmit any frame to the first STA within the second time interval; or the AP does not transmit any frame to the first STA within the second time interval.

The second time interval includes one of:
- a default duration, such as a PIFS, PIFS + delta (delta > 0), or a DIFS;
- a duration indicated by a DSO frame sent by the AP; or
- an end time of the current TXOP, at which point the UHR STA automatically switches back to the primary channel.

**In step 980,** the first STA receives, on the primary channel, a third frame from the AP.

The third frame includes an RTS frame, an MU-RTS frame, or a QoS Null frame.

In some embodiments, the first STA receives the sixth frame on the first secondary channel, and after an SIFS, the first STA receives the third frame on the primary channel. Alternatively, the first STA receives the sixth frame on the first secondary channel, and after a first time interval, the first STA receives the third frame on the primary channel. The first time interval is longer than the SIFS.

**In step 990,** the first STA responds to the AP with a fourth frame on the primary channel.

The fourth frame includes a CTS frame, an ACK frame, or a BA frame.

In some embodiments, in a case where the third frame is an RTS frame or an MU-RTS frame, the fourth frame is a CTS frame; or in a case where the third frame is a QoS Null frame, the fourth frame is an ACK frame or a BA frame.

The interaction between the AP and the first STA via the third frame and the fourth frame, not only facilitates the AP in checking whether the first STA has successfully switched to the primary channel, but also allows for re-reservation of the channel on the primary channel and elimination of the hidden terminal problem to ensure that the first STA uses the primary channel normally.

In some embodiments, in a case where the first STA switches back to the primary channel, since the TXOP holder of the channels within the entire wide bandwidth remains the AP itself, the AP and the first STA may also bypass the exchange of the third frame and the fourth frame.

In some embodiments, in response to switching to the first secondary channel based on the first frame, the first STA receives a frame on the first secondary channel instructing the first STA to switch to another secondary channel, and then the first STA switches to the other secondary channel. In some embodiments, the first STA interacts with the AP via third and fourth frames on the other secondary channel, and/or, the first STA receives a frame on the other secondary channel instructing the first STA to switch to the primary channel, and then the first STA switches to the primary channel.

In some embodiments, in a case where the AP acquires a long TXOP duration, some or all of the above steps may be performed within the same TXOP, resulting in a higher gain for the channel switching method according to the present disclosure. In some embodiments, in a case where the AP acquires a short TXOP duration, some or all of the above steps are performed within a plurality of TXOPs, resulting in a lower gain for the channel switching method according to the present disclosure.

In summary, the method according to the present disclosure supports the first STA to perform flexible channel switching. Since the first STA may include the legacy device, or the first STA may also include the new-standard device, flexible switching of the operating channels of the legacy device or the new-standard device is enabled without changing the primary channel of the BSS. This approach not only helps alleviate the load and interference on the primary channel but also improves channel utilization rate, particularly the utilization rate of the secondary channel, and reduces resource waste. In addition, the interaction of the third and fourth frames facilitates the confirmation of the completion status of the channel switching by the first STA, and avoids the hidden terminal problem, thereby improving the reliability and stability of transmission. Moreover, the first STA is supported to switch back to the primary channel, which avoids the situation where the first STA fails to detect the control frames and/or management frames sent by the AP on the secondary channel, thereby ensuring that the first STA operates normally during the flexible switching of channels.

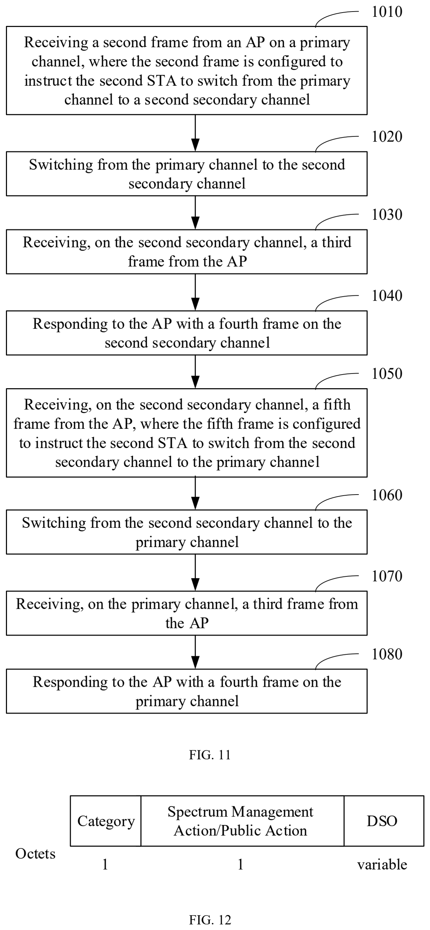

FIG. 11 is a flowchart of a channel switching method according to some exemplary embodiments of the present disclosure. In a case where the method is performed by a second STA, the method includes at least a portion of the following steps:
**In step 1010,** the second STA receives a second frame from an AP on a primary channel, wherein the second frame is configured to instruct the second STA to switch from the primary channel to a second secondary channel.

The AP and the second STA belong to the same BSS, which includes one AP and at least one STA. The primary channel refers to the primary channel of this BSS.

The AP may be the AP 610 shown in FIG. 6, such as a UHR AP. The second STA may be the STA 620 shown in FIG. 6.

The channels on which the AP operates include one primary channel and at least one secondary channel. The bandwidths of the primary channel and the secondary channel(s) are the same or different. The secondary channels have the same or different bandwidths.

Subsequent to establishing an association with the AP, the second STA operates on the primary channel; or, in the initial state, the second STA operates on the primary channel; or, the second STA operates on the primary channel by default; or, the second STA operates on the primary channel based on AP scheduling. Operating on the primary channel may mean that the second STA transmits at least one of a data frame, a control frame, or a management frame with the AP on the primary channel, and/or that the second STA interacts with other STAs via the AP on the primary channel, exchanging at least one of the data frame, the control frame, or the management frame. The other STA refers to an STA in the BSS other than the first STA.

The second STA is a single STA or includes at least two STAs with the same or different standards.

In some embodiments, the standard of the second STA includes at least one of: 802.11ax, 802.11ac, 802.11n, 802.11g, 802.11b, 802.11a, 802.11be, a standard corresponding to a UHR STA, or a future standard evolved from the standard corresponding to the UHR STA.

In some embodiments, the second frame includes at least one of: a subband-switch control frame, an MU-RTS frame, a BSRP frame, a Beacon frame carrying a DSO element, a Probe Response frame carrying a DSO element, a Probe Response frame carrying a DSO element and a Channel Switch Announcement element, a Probe Response frame carrying a DSO element and an Extended Channel Switch Announcement element, a Beacon frame carrying a DSO element and a Channel Switch Announcement element, a Beacon frame carrying a DSO element and an Extended Channel Switch Announcement element, other frame carrying a DSO element and a Channel Switch Announcement element, or other frame carrying a DSO element and an Extended Channel Switch Announcement element. The other frame refers to a frame other than the Probe Response frame and the Beacon frame.

In some embodiments, the second frame is a DSO frame. The format of the DSO frame is shown in FIG. 12, wherein the number below each field represents the number of octets of the field. The fields include at least one of: a Category field, a Spectrum Management Action field, a Public Action field, or a variable DSO element.

It should be understood that, in the embodiments of the present disclosure, the values of the fields or elements are merely examples and do not imply any restrictions on the values of the fields or elements, nor do they imply any restrictions on the meanings of the fields or elements.

For example, in a case where the Category field is set to 0, the frame belongs to Action frames of a spectrum management type. The Spectrum Management Action field is set to any value within a range from 5 to 255. For example, in a case where the value of the Spectrum Management Action field is set to 5, the frame is a DSO frame.

For example, in a case where the Category field is set to 4, the frame belongs to Action frames of a public type. The Public Action field is set to any value within a range from 47 to 255. For example, in a case where the value of the Public Action field is set to 5, the frame is a DSO frame.

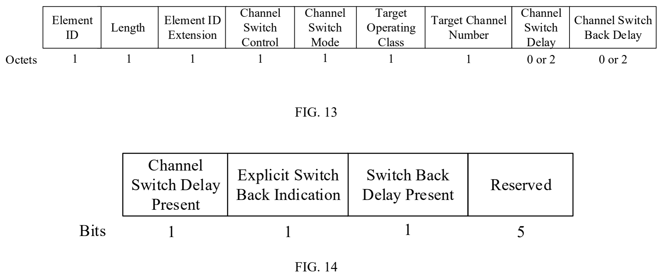

In some embodiments, the format of the DSO element is shown in FIG. 13, where the number below each field represents the number of octets of the field. In some embodiments, the DSO element includes some or all of the fields shown in FIG. 13. An Element Identity (Element ID) field is set to 255. A Length field indicates the length of the DSO element. An Element ID Extension field is set to any value within a range of 94-113, 115, or 117-255. For example, in a case where the Element ID Extension field is set to 117, this element is a DSO element. The format and meaning of a Channel Switch Mode field is as previously described and is not described in detail herein. The format and meaning of a Target Operating Class field may be referred to the previous description of "New Operating Class field" and is not be described in detail herein. The format and meaning of a Target Channel Number field may be referred to the previous description of "New Channel Number field" and is not be described in detail herein.

In some embodiments, a format of a Channel Switch Control field is shown in FIG. 14, where the number below each field represents the number of bits of the field. In some embodiments, the Channel Switch Control field includes some or all of the fields shown in FIG. 14. In the Channel Switch Control field:
- In a case where a Channel Switch Delay Present subfield is set to 0, no Channel Switch Delay field is present within the DSO element. This means that the second STA which has received the DSO frame needs to complete the channel switch in the shortest possible time, such as within the SIFS duration. In a case where the Channel Switch Delay Present subfield is set to 1, the Channel Switch Delay field is present within the DSO element. This means that the second STA which has received the DSO frame needs to complete the channel switch within the sum of the time indicated by the Channel Switch Delay field and the SIFS. For example, the time unit indicated by the Channel Switch Delay field is microseconds (µs).
- In a case where an Explicit Switch Back Indication subfield is set to 1, the second STA needs to switch back to the primary channel according to instructions in the DSO frame only in response to receiving the DSO frame instructions from the AP. In this case, a Switch Back Delay Present subfield is set to 0, indicating that no Switch Back Delay field is present within the DSO element.

In a case where the Explicit Switch Back Indication subfield is set to 0, the second STA does not need to receive the DSO frame indications from the AP, and the second STA may, by default, perform an automatic switch back to the primary channel upon timeout, in accordance with the indications from the Switch Back Delay Present subfield. This example may therefore be interpreted as an implicit switch back to the primary channel.
- In the case where the Explicit Switch Back Indication subfield is set to 0, if the Switch Back Delay Present subfield is also set to 0, no Switch Back Delay field is present within the DSO element. In this case, the second STA that has received the DSO frame needs to complete the channel switch in the shortest possible time, such as within the PIFS duration. In the case where the Explicit Switch Back Indication subfield is set to 1, if the Switch Back Delay Present Subfield is also set to 1, a Switch Back Delay field is present within the DSO element. In this case, the second STA that has received the DSO frame needs to complete the channel switch within the sum of the time indicated by the Channel Switch Delay field and the PIFS. For example, the time unit indicated by the Channel Switch Delay field is microseconds (µs). The time is indicated by the Channel Switch Delay field.

It should be noted that the specific values set for the Channel Switch Delay field and the Switch Back Delay field may be determined by the AP and the second STA based on their respective capabilities during an initial stage of capability interaction (e.g., during a stage at which the AP establishes an association with the second STA). In a case where the second STA has strong capabilities for channel switching, the Channel Switch Delay field and the Switch Back Delay field may be set to have smaller values (or even 0). In a case where the second STA has weak capabilities for channel switching, the Channel Switch Delay field and the Switch Back Delay field may be set to have larger values.

In some embodiments, the DSO frame shown in FIG. 11 carries not only the DSO element but also additional elements, e.g., a Secondary Channel Offset element from a Channel Switch Announcement frame, and/or a Wide Bandwidth Channel Switch element, and/or a New Transmit Power Envelope element, and/or a New Country element from an Extended Channel Switch Announcement frame, among others. The elements/information may assist the AP in utilizing the DSO frame to enable the second STA to perform additional functions when performing channel switching, such as indicating the offset of the secondary channel relative to the primary channel, switching to a wider bandwidth, and the transmit power to be used in response to switching. For specific functionalities, reference can be made to the relevant indications and descriptions of the Channel Switch Announcement frame and/or the Extended Channel Switch Announcement frame as previously described, which are not repeated herein.

**In step 1020,** the second STA switches from the primary channel to the second secondary channel.

The second secondary channel includes at least one secondary channel on which the AP operates. In a case where the second secondary channel is a single secondary channel, the second frame is configured to instruct the second STA to switch from the primary channel to this secondary channel. That is, the second frame is configured to instruct the second STA to switch from operating on the primary channel to operating on the second secondary channel. In a case where the second secondary channel includes at least two secondary channels, the at least two secondary channels are referred to as subchannels of the second secondary channel, and the second frame is configured to instruct the second STA to switch from the primary channel to the at least two secondary channels. That is, the second frame is configured to instruct the second STA to switch from operating on the primary channel to operating on the at least two secondary channels. The subchannels of the second secondary channel have the same or different bandwidths.

The second STA switches from the primary channel to the second secondary channel based on the received second frame.

**In step 1030,** the second STA receives, on the second secondary channel, a third frame from the AP.

The third frame includes an RTS frame, an MU-RTS frame, or a QoS Null frame.

In some embodiments, the second STA receives the second frame on the primary channel, and after an SIFS, the second STA receives the third frame on the second secondary channel. Alternatively, the second STA receives the second frame on the primary channel, and after a first time interval, the second STA receives the third frame on the second secondary channel. The first time interval is longer than the SIFS.

**In step 1040,** the second STA responds to the AP with a fourth frame on the second secondary channel.

The fourth frame includes a CTS frame, an ACK frame, or a BA frame.

In some embodiments, in a case where the third frame is an RTS frame or an MU-RTS frame, the fourth frame is a CTS frame; or in a case where the third frame is a QoS Null frame, the fourth frame is an ACK frame or a BA frame.

In some embodiments, the second STA responds to the AP with the fourth frame on the second secondary channel, or the second STA responds to the AP with the fourth frame on at least one subchannel of the second secondary channel.

The interaction between the AP and the second STA via the third frame and the fourth frame, not only facilitates the AP in checking whether the second STA has successfully switched to the second secondary channel, but also allows for re-reservation of the channel on the secondary channel and elimination of the hidden terminal problem to ensure that the second STA uses the secondary channel normally.

In some embodiments, in a case where the second STA switches to the second secondary channel, since the TXOP holder of the channels within the entire wide bandwidth remains the AP itself, the AP and the second STA may also bypass the exchange of the third frame and the fourth frame.

**In step 1050,** the second STA receives, on the second secondary channel, a fifth frame from the AP, wherein the fifth frame is configured to instruct the second STA to switch from the second secondary channel to the primary channel.

The fifth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, a Beacon frame carrying an Extended Channel Switch Announcement element, other frame carrying a Channel Switch Announcement element, or other frame carrying an Extended Channel Switch Announcement element. The other frame refers to a frame other than the Probe Response frame and the Beacon frame.

In some embodiments, the fifth frame includes at least one of: a Channel Switch Mode field, a New Channel Number field, or a Channel Switch Count field.

In some embodiments, in a case where the Channel Switch Mode field is set to a first value, the Channel Switch Mode field is configured to instruct the second STA to immediately stop transmitting any frame upon receiving the fifth frame; or in a case where the Channel Switch Mode field is set to a second value, the Channel Switch Mode field does not impose any requirement on the second STA. For example, the first value includes "1" and the second value includes "0."

In some embodiments, the New Channel Number field in the fifth frame is configured to indicate the primary channel, which means that the value of the New Channel Number field in the fifth frame is the number corresponding to the primary channel.

In some embodiments, in a case where the Channel Switch Count field is set to a third value, the Channel Switch Count field is configured to instruct the second STA to switch to the primary channel within the current TXOP in response to receiving the fifth frame. Alternatively, the Channel Switch Count field is configured to instruct the second STA to switch to the primary channel as soon as (or on a best-effort basis) receiving the fifth frame. For example, the third value includes "0."

**In step 1060,** the second STA switches from the second secondary channel to the primary channel.

In some embodiments, the second STA switches from the second secondary channel to the primary channel based on the received fifth frame.

For example, the value of the New Channel Number field in the sixth frame is the number corresponding to the primary channel. In a case where the Channel Switch Mode field in the sixth frame is set to a second value (e.g., "0"), the AP does not impose requirements on the switching mode of the first STA upon reception of the sixth frame by the first STA. The first STA may immediately stop transmitting any frame, and upon switching to the primary channel, the first STA transmits frames that are pending on the first secondary channel before the switch. Alternatively, the first STA may switch to the primary channel upon completion of the current transmission. In a case where the value of the Channel Switch Count field included the first frame is a third value (e.g., "0"), the first STA switches to the primary channel as soon as possible within the current TXOP. Depending on the capabilities of the first STA, the channel switch may be completed by the first STA in tens to serval tens of microseconds.

In some embodiments, the second STA automatically switches to the primary channel when a first condition is met. The first condition includes at least one of: the second STA does not need to transmit any frame to the AP within a second time interval; the second STA does not intend to transmit any frame to the AP within the second time interval; the second STA does not transmit any frame to the AP within the second time interval; the AP does not need to transmit any frame to the second STA within the second time interval; the AP does not intend to transmit any frame to the second STA within the second time interval; or the AP does not transmit any frame to the second STA within the second time interval.

The second time interval includes one of:
- a default duration, such as a PIFS, PIFS + delta (delta > 0), or a DIFS;
- a duration indicated by a DSO frame sent by the AP; or
- an end time of the current TXOP, at which point the UHR STA automatically switches back to the primary channel.

In some embodiments, delta includes the time indicated by a Channel Switch Delay field.

**In step 1070,** the second STA receives, on the primary channel, a third frame from the AP.

The third frame includes an RTS frame, an MU-RTS frame, or a QoS Null frame.

In some embodiments, the second STA receives the fifth frame on the second secondary channel, and after an SIFS, the second STA receives the third frame on the primary channel. Alternatively, the second STA receives the fifth frame on the second secondary channel, and after a first time interval, the second STA receives the third frame on the primary channel. The first time interval is longer than the SIFS.

**In step 1080,** the second STA responds to the AP with a fourth frame on the primary channel.

The fourth frame includes a CTS frame, an ACK frame, or a BA frame.

In some embodiments, in a case where the third frame is an RTS frame or an MU-RTS frame, the fourth frame is a CTS frame; or in a case where the third frame is a QoS Null frame, the fourth frame is an ACK frame or a BA frame.

The interaction between the AP and the second STA via the third frame and the fourth frame, not only facilitates the AP in checking whether the second STA has successfully switched to the primary channel, but also allows for re-reservation of the channel on the primary channel and elimination of the hidden terminal problem to ensure that the second STA uses the primary channel normally.

In some embodiments, in a case where the second STA switches back to the primary channel, since the TXOP holder of the channels within the entire wide bandwidth remains the AP itself, the AP and the second STA may also bypass the exchange of the third frame and the fourth frame.

In some embodiments, in response to switching to the second secondary channel based on the second frame, the second STA receives a frame on the second secondary channel instructing the second STA to switch to another secondary channel, and then the second STA switches to the other secondary channel. In some embodiments, the second STA interacts with the AP via third and fourth frames on the other secondary channel, and/or, the second STA receives a frame on the other secondary channel instructing the second STA to switch to the primary channel, and then the second STA switches to the primary channel.

In some embodiments, in a case where the AP acquires a long TXOP duration, some or all of the above steps may be performed within the same TXOP, resulting in a higher gain for the channel switching method according to the present disclosure. In some embodiments, in a case where the AP acquires a short TXOP duration, some or all of the above steps are performed within a plurality of TXOPs, resulting in a lower gain for the channel switching method according to the present disclosure.

In summary, the method according to the present disclosure supports the second STA to perform flexible channel switching. Since the second STA may include the legacy device, or the second STA may also include the new-standard device, flexible switching of the operating channels of the legacy device or the new-standard device is enabled without changing the primary channel of the BSS. This approach not only helps alleviate the load and interference on the primary channel but also improves channel utilization rate, particularly the utilization rate of the secondary channels, thereby reducing resource waste. In addition, the interaction of the third and fourth frames facilitates the confirmation of the completion status of the channel switching by the second STA, and avoids the hidden terminal problem, thereby improving the reliability and stability of transmission. Moreover, newly designed DSO frames and DSO elements are provided, making the channel switching of the second STA more flexible and convenient, and improving the spectral utilization rate. Furthermore, the second STA is supported to switch back to the primary channel for operation, which avoids the situation where the second STA fails to detect the control frames and/or management frames sent by the AP on the secondary channel, thereby ensuring that the second STA operates normally during the flexible switching of channels.

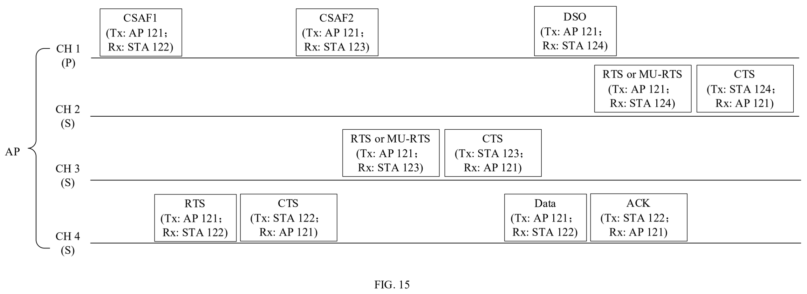

FIG. 15 is a schematic diagram of a channel switching method according to some exemplary embodiments of the present disclosure. Description is given hereinafter using an example where the method is performed by an AP and STAs.

The BSS includes one AP and at least one STA, such as an AP 121, an STA 122, an STA 123, and an STA 124. The AP 121 obtains the right to use a wide bandwidth channel. For example, the total bandwidth of the channel obtained by the AP 121 is 40 MHz, 80 MHz, 160 MHz, 320 MHz, or 480 MHz, or the like, which may include at least two channels. The bandwidths of the at least two channels may be the same or different, and one of the at least two channels is the primary channel. For example, the at least two channels include: two 20 MHz channels, four 20 MHz channels, eight 20 MHz channels, eight 40 MHz channels, sixteen 20 MHz channels, or twenty-four 20 MHz channels, or the like.

Description is given hereinafter using an example where the AP has obtained the usage right of four 20 MHz channels (i.e., having 80 MHz total bandwidth).

In the initial state, all STAs (i.e., the STA 122, the STA 123, and the STA 124) in the BSS operate on the primary channel CH1. Exemplarily, the STA 122 is an HT STA or VHT STA, the STA 123 is an HE STA or EHT STA, and the STA 124 is a UHR STA.

When there are many devices operating on the primary channel CH1 or the primary channel is congested, the AP 121 assigns some or all STAs to operate on secondary channels to reduce the load pressure on the primary channel.

The AP 121 transmits a Channel Switch Announcement frame 1 (abbreviated as CSAF1) to the STA 122 on the primary channel CH1, instructing the STA 122 to switch from the primary channel CH1 to the secondary channel CH4. That is, the AP 121 is the transmitter (Tx) of CSAF1, and the STA 122 is the receiver (Rx) of CSAF1. Exemplarily, in a case where the value of the Channel Switch Mode field in the Channel Switch Announcement element of CSAF1 is set to 1, the STA 122 immediately stops transmitting any frames upon receiving CSAF1. In a case where the value of the Channel Switch Mode field in the Channel Switch Announcement element of CSAF1 is set to 0, CSAF1 does not impose any restrictions on the behaviors of the STA 122 upon reception of CSAF1 by the STA 122. The New Channel Number element in CSAF1 indicates the number corresponding to the secondary channel CH4. The value of the Channel Switch Count field in CSAF1 is 0, instructing the STA 122 to switch to the secondary channel CH4 as soon as possible within the current TXOP. CSAF1 may also carry other elements as described earlier, which are not repeated herein.

In a case where the RA field in CSAF1 is set to a unicast address (e.g., the address of the STA 122), the channel switch instructions in CSAF1 act only on the STA that has received CSAF1 (e.g., the STA 122). In a case where the RA field in CSAF1 is set to a multicast address (e.g., the multicast address corresponding to the STA 122 and the STA 123), the channel switch instructions in CSAF1 act on the group of STAs that have received CSAF1 (e.g., the STA 122 and the STA 123). In a case where the RA field in CSAF1 is set to a broadcast address (e.g., CSAF1 is sent to all STAs in the BSS), the channel switch instructions in CSAF1 act on all STAs that have received CSAF1 (e.g., all STAs in the BSS).

The AP 121 transmits an RTS frame to the STA 122 on the secondary channel CH4, and the STA 122 responds to the AP 121 with a CTS frame on the secondary channel CH4.

The AP 121 and the STA 122 may perform data transmission on the secondary channel CH4. Exemplarily, the AP 121 transmits a data frame to the STA 122 on the secondary channel CH4, and the STA 122 responds to the AP 121 with an ACK frame on the secondary channel CH4.

The AP 121 transmits a Channel Switch Announcement frame 2 (abbreviated as CSAF2) to the STA 123 on the primary channel CH1, instructing the STA 123 to switch from the primary channel CH1 to the secondary channel CH3. That is, the AP 121 is the transmitter (Tx) of CSAF2, and the STA 123 is the receiver (Rx) of CSAF2. The settings of the fields or elements in CSAF2 can refer to CSAF1 and are not repeated herein.

The AP 121 transmits an RTS frame or MU-RTS frame to the STA 123 on the secondary channel CH3, and the STA 123 responds to the AP 121 with a CTS frame on the secondary channel CH3.

The AP 121 and the STA 123 may perform data transmission on the secondary channel CH3. Exemplarily, the AP 121 transmits a data frame to the STA 123 on the secondary channel CH3, and the STA 123 responds to the AP 121 with an ACK frame on the secondary channel CH3 (not shown).

The AP 121 transmits a DSO frame to the STA 124 on the primary channel CH1, instructing the STA 124 to switch from the primary channel CH1 to the secondary channel CH2. That is, the AP 121 is the transmitter (Tx) of the DSO frame, and the STA 124 is the receiver (Rx) of the DSO frame. The settings of the fields or elements in the DSO frame can refer to the previous description and are not repeated herein.

The AP 121 transmits an RTS frame or MU-RTS frame to the STA 124 on the secondary channel CH2, and the STA 124 responds to the AP 121 with a CTS frame on the secondary channel CH2.

The AP 121 and the STA 124 may perform data transmission on the secondary channel CH2. Exemplarily, the STA 124 transmits a data frame to the AP 121 on the secondary channel CH2, and the AP 121 responds to the STA 124 with an ACK frame on the secondary channel CH2 (not shown).

In summary, the method according to the present disclosure supports both the legacy device and the new-standard device to switch to the secondary channels for operation, respectively. The flexible switching of the operating channels of the legacy and new-standard devices is enabled without changing the primary channel of the BSS. The full utilization of the large bandwidth characteristics of future UHR technology is not only conductive to alleviating the load on the primary channel but also to improving channel utilization rate, particularly the utilization rate of the secondary channel, thus reducing resource waste.

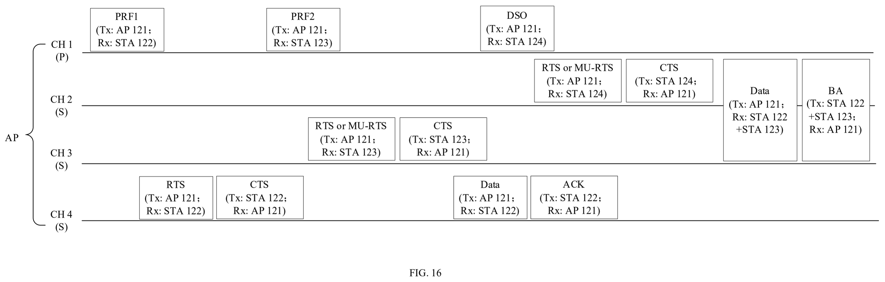

FIG. 16 is a schematic diagram of a channel switching method according to some exemplary embodiments of the present disclosure. Description is given hereinafter using an example where the method is performed by an AP and STAs.

The BSS includes one AP and at least one STA, such as an AP 121, an STA 122, an STA 123, and an STA 124. The AP 121 obtains the rights to use a wide bandwidth channel. For example, the total bandwidth of the channel obtained by AP 121 is 40 MHz, 80 MHz, 160 MHz, 320 MHz, or 480 MHz, or the like, which may include at least two channels. The bandwidths of the at least two channels may be the same or different, and one of the at least two channels is the primary channel. For example, the at least two channels include: two 20 MHz channels, four 20 MHz channels, eight 20 MHz channels, eight 40 MHz channels, sixteen 20 MHz channels, twenty-four 20 MHz channels, or three 20 MHz channels plus one 40 MHz channel, or the like.

Description is given hereinafter using an example where the AP has obtained the usage rights of four 40 MHz channels (i.e., having 160 MHz total bandwidth).

In the initial state, all STAs (i.e., the STA 122, the STA 123, and the STA 124) in the BSS operate on the primary channel CH1. Exemplarily, the STA 122 is an HT STA or VHT STA, the STA 123 is an HE STA or EHT STA, and the STA 124 is a UHR STA.

When there are many devices operating on the primary channel CH1 or the primary channel is congested, the AP 121 assigns some or all STAs to operate on secondary channels to reduce the load pressure on the primary channel.

The AP 121 actively transmits a Probe Response frame 1 (abbreviated as PRF1) to the STA 122, i.e., the AP 121 transmits PRF1 to the STA 122 without receiving a Probe Request frame from the STA 122. PRF1 instructs the STA 122 to switch from the primary channel CH1 to the secondary channel CH4. That is, the AP 121 is the transmitter (Tx) of PRF1, and the STA 122 is the receiver (Rx) of PRF1. PRF1 includes a Channel Switch Announcement element or an Extended Channel Switch Announcement element. The format and meaning of the Channel Switch Announcement element or Extended Channel Switch Announcement element can refer to the previous description and are not repeated herein.

The AP 121 transmits an RTS frame to the STA 122 on the secondary channel CH4, and the STA 122 responds to the AP 121 with a CTS frame on the secondary channel CH4.

The AP 121 and the STA 122 may perform data transmission on the secondary channel CH4. Exemplarily, the AP 121 transmits a data frame to the STA 122 on the secondary channel CH4, and the STA 122 responds to the AP 121 with an ACK frame on the secondary channel CH4.

The AP 121 actively transmits a Probe Response frame 2 (abbreviated as PRF2) to the STA 123, instructing the STA 123 to switch from the primary channel CH1 to the secondary channel CH3. That is, the AP 121 is the transmitter (Tx) of PRF2, and the STA 123 is the receiver (Rx) of PRF2.

The AP 121 transmits an RTS frame or MU-RTS frame to the STA 123 on the secondary channel CH3, and the STA 123 responds to the AP 121 with a CTS frame on the secondary channel CH3.

The AP 121 and the STA 123 may perform data transmission on the secondary channel CH3.

The AP 121 transmits a DSO frame to the STA 124, instructing the STA 124 to switch from the primary channel CH1 to the secondary channel CH2. That is, the AP 121 is the transmitter (Tx) of the DSO frame, and the STA 124 is the receiver (Rx) of the DSO frame. The settings of the fields or elements in the DSO frame can refer to the previous description and are not repeated herein.

The AP 121 transmits an RTS frame or MU-RTS frame to the STA 124 on the secondary channel CH2, and the STA 124 responds to the AP 121 with a CTS frame on the secondary channel CH2.

The AP 121 and the STA 124 may perform data transmission on the secondary channel CH2.

Exemplarily, the AP 121 transmits data frames on the secondary channels CH2 and CH3, and the STA 123 and the STA 124 respond to the AP 121 with BA frames on the secondary channels CH2 and CH3.

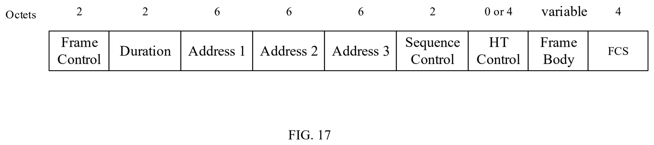

A Probe Response frame is a management frame. Exemplarily, the format of the management frame is shown in FIG. 17, where the number below each field presents the number of octets of the field. In this management frame:
• In a case where bits B3 and B2 of a Frame Control field are set to "00," respectively, and bits B7, B6, B5, and B4 are set to "0101," respectively, this management frame is a Probe Response frame. Herein, B3 and B2 belong to the Type field, and B7, B6, B5, and B4 belong to the Subtype field.
• A Duration field indicates the duration for which this management frame lasts.
• An Address 1 field indicates a Receiver Address/Receiving Station Address (RA), i.e., the MAC address of the receiver.
• An Address 2 field indicates the Transmitter Address/Transmitting Station Address (TA), i.e., the MAC address of the transmitter.
• An Address 3 field indicates a BSS ID of the BSS where the receiver is located.
• A Sequence Control field indicates the transmission sequence number corresponding to this management frame.
• A HT Control field carries control commands.
• A Frame Check Sequence (FCS) field is configured to verify the integrity of this management frame.
• A format design of a Frame Body field is shown in Table 2, which does not mean that this management frame must carry all the Orders in Table 2 simultaneously. The management frame may carry one or more of the Orders shown in Table 2.

**Table 2 Frame Body of Management Frame**

| Order | Information |
|---|---|
| 1 | Timestamp |
| ... | ... |
| 10 | Channel Switch Announcement (optional) |
| ... | ... |
| 29 | Extended Channel Switch Announcement (optional) |
| ... | ... |
| a | DSO |

Order 10 is configured to carry a Channel Switch Announcement element. Order 29 is configured to carry an Extended Channel Switch Announcement element. Order a is configured to carry the DSO element described earlier.

In some embodiments, the Frame Body of the Probe Response frame carries the Channel Switch Announcement element of Order 10 and/or the Extended Channel Switch Announcement element of Order 29.

In some embodiments, the Frame Body of the Probe Response frame carries the DSO element of Order a.

In summary, the method according to the present disclosure supports both the legacy device and the new-standard device to switch to the secondary channels for operation, respectively, without changing the primary channel of the entire BSS. The flexible switching of the operating channels of the legacy and new-standard devices is enabled. The full utilization of the large bandwidth characteristics of future UHR technology is not only conductive to alleviating the load on the primary channel but also improving channel utilization rate, particularly the utilization rate of the secondary channel, thus reducing resource waste.

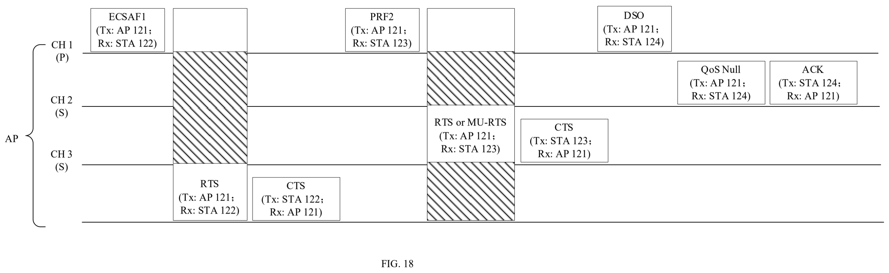

FIG. 18 is a schematic diagram of a channel switching method according to some exemplary embodiments of the present disclosure. Description is given hereinafter using an example where the method is performed by an AP and STAs.

The BSS includes one AP and at least one STA, such as an AP 121, an STA 122, an STA 123, and an STA 124. The AP 121 obtains the right to use a wide bandwidth channel. For example, the total bandwidth of the channel obtained by the AP 121 is 40 MHz, 80 MHz, 160 MHz, 320 MHz, or 480 MHz, or the like, which may include at least two channels. The bandwidths of the at least two channels may be the same or different, and one of the at least two channels is the primary channel. For example, the at least two channels include: two 20 MHz channels, four 20 MHz channels, eight 20 MHz channels, eight 40 MHz channels, sixteen 20 MHz channels, twenty-four 20 MHz channels, or three 20 MHz channels plus one 40 MHz channel, or the like.

Description is given hereinafter using an example where the AP has obtained the usage rights of four 40 MHz channels (i.e., having 160 MHz total bandwidth).

In the initial state, all STAs (i.e., the STA 122, the STA 123, and the STA 124) in the BSS operate on the primary channel CH1. Exemplarily, the STA 122 is an HT STA or VHT STA, the STA 123 is an HE STA or EHT STA, and the STA 124 is a UHR STA.

When there are many devices operating on the primary channel CH1 or the primary channel is congested, the AP 121 assigns some or all STAs to operate on secondary channels to reduce the load pressure on the primary channel.

The AP 121 transmits an Extended Channel Switch Announcement frame 1 (abbreviated as ECSAF1) to the STA 122 on the primary channel CH1, instructing the STA 122 to switch from the primary channel CH1 to the secondary channel CH4. That is, the AP 121 is the transmitter (Tx) of ECSAF 1, and the STA 122 is the receiver (Rx) of ECSAF 1. The settings of the fields or elements in the Extended Channel Switch Announcement frame can refer to the previous description and are not repeated herein.

The AP 121 transmits an RTS frame to the STA 122 via puncturing. As shown in the figure, the AP 121 transmits the RTS frame on the large bandwidth composed of channels CH1, CH2, CH3, and CH4. Since the STA 122 has switched to the secondary channel CH4 and operated on the secondary channel CH4, the AP punctures the secondary channels CH2 and CH3. Finally, the RTS frame is transmitted by the AP 121 on the primary channel CH1 and the secondary channel CH4. Since the RTS frame is transmitted to the STA 122 (e.g., the RA address in the RTS frame is the MAC address of the STA 122), only the STA 122 responds to the AP 121 with a CTS frame on the secondary channel CH4. The STA 122 responds to the AP 121 with the CTS frame on the secondary channel CH4, indicating that STA 122 has successfully switched to the secondary channel CH4 for operation.

The AP 121 actively transmits a Probe Response frame 2 (abbreviated as PRF2) to the STA 123 on the primary channel CH1, instructing the STA 123 to switch from the primary channel CH1 to the secondary channel CH3. That is, the AP 121 is the transmitter (Tx) of PRF2, and the STA 123 is the receiver (Rx) of PRF2. The settings of the fields or elements in the Probe Response frame can refer to the previous description and are not repeated here.

The AP 121 transmits an RTS frame or MU-RTS frame to the STA 123 via puncturing. As shown in the figure, AP 121 transmits the RTS frame or MU-RTS frame on the large bandwidth composed of channels CH1, CH2, CH3, and CH4. Since the STA 123 has switched to the secondary channel CH3 and operated on the secondary channel CH3, the AP punctures the channels CH2 and CH4. Finally, the RTS frame or MU-RTS frame is sent by the AP 121 on the primary channel CH1 and the secondary channel CH3. Since the RTS frame or MU-RTS frame is transmitted to the STA 123 (e.g., the RA address in the RTS frame or MU-RTS frame is the MAC address of STA 123), only the STA 123 responds to the AP 121 with a CTS frame on the secondary channel CH3. The STA 123 responds to the AP 121 with the CTS frame on the secondary channel CH 3, indicating that the STA 123 has successfully switched to the CH3 for operation.

The AP 121 transmits a DSO frame to the STA 124 on the primary channel CH1, instructing the STA 124 to switch from the primary channel CH1 to the secondary channel CH2. That is, the AP 121 is the transmitter (Tx) of the DSO frame, and the STA 124 is the receiver (Rx) of the DSO frame. The settings of the fields or elements in the DSO frame can refer to the previous description and are not repeated herein.

The AP 121 transmits a QoS Null frame to the STA 124 on the secondary channel CH2, and the STA 124 responds to the AP 121 with an ACK frame on the secondary channel CH2. The STA 124 responds to the AP 121 with the ACK frame on the secondary channel CH2, indicating that the STA 124 has successfully switched to the secondary channel CH2 for operation.

In summary, the method according to the present disclosure supports both the legacy device and the new-standard device to switch to secondary channels for operation, respectively, enabling flexible switching of the operating channels of legacy and new-standard devices without changing the primary channel of the BSS. The full utilization of the large bandwidth characteristics of future UHR technology is not only conductive to alleviating the load on the primary channel but also improving channel utilization rate, particularly the utilization rate of the secondary channels, thus reducing resource waste. Moreover, the interaction between the RTS frame and the CTS frame, or between the QoS Null frame and the ACK frame, helps confirm whether each STA has successfully switched to the secondary channel and avoid the hidden terminal problem.

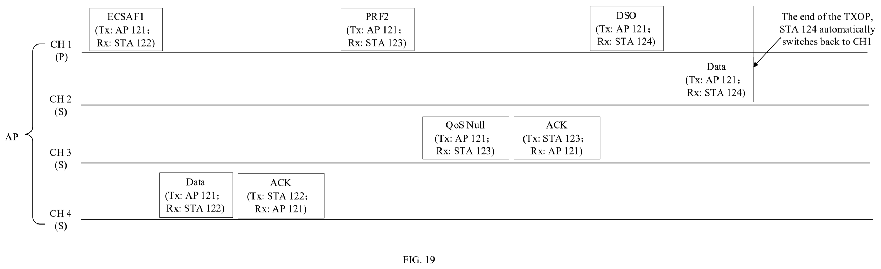

FIG. 19 is a schematic diagram of a channel switching method according to some exemplary embodiments of the present disclosure. Description is given hereinafter using an example where the method is performed by an AP and STAs.

The BSS includes one AP and at least one STA, such as an AP 121, an STA 122, STA 123, and an STA 124. The AP 121 obtains the authorization to use a wide bandwidth channel. For example, the total bandwidth of the channel obtained by the AP 121 is 40 MHz, 80 MHz, 160 MHz, 320 MHz, or 480 MHz, or the like, which may include at least two channels. The bandwidths of the at least two channels may be the same or different, and one of the at least two channels is the primary channel. For example, the at least two channels include: two 20 MHz channels, four 20 MHz channels, eight 20 MHz channels, eight 40 MHz channels, sixteen 20 MHz channels, twenty-four 20 MHz channels, or three 20 MHz channels plus one 40 MHz channel, or the like.

Description is given hereinafter using an example where the AP has obtained the usage rights of four 40 MHz channels (i.e., having 160 MHz total bandwidth).

In the initial state, all STAs (i.e., the STA 122, the STA 123, and the STA 124) in the BSS operate on the primary channel CH1. Exemplarily, the STA 122 is an HT STA or VHT STA, the STA 123 is an HE STA or EHT STA, and the STA 124 is a UHR STA.

When there are many devices operating on the primary channel CH1 or the primary channel is congested, the AP 121 assigns some or all STAs to operate on secondary channels to reduce the load pressure on the primary channel.

The AP 121 transmits an Extended Channel Switch Announcement frame 1 (abbreviated as ECSAF1) to the STA 122 on the primary channel CH1, instructing the STA 122 to switch from the primary channel CH1 to the secondary channel CH4. That is, the AP 121 is the transmitter (Tx) of ECSAF1, and the STA 122 is the receiver (Rx) of ECSAF 1. The settings of the fields or elements in the Extended Channel Switch Announcement frame can refer to the previous description and are not repeated herein.

The AP 121 does not confirm or check whether the STA 122 has successfully switched to the secondary channel CH4. In some embodiments, the AP 121 directly transmits a data frame to the STA 122 on the secondary channel CH4, or the STA 122 directly transmits a data frame to the AP 121 in response to switching to the secondary channel CH4.

The AP 121 actively transmits a Probe Response frame 2 (abbreviated as PRF2) to the STA 123 on the primary channel CH1, instructing the STA 123 to switch from the primary channel CH1 to the secondary channel CH3. That is, the AP 121 is the transmitter (Tx) of PRF2, and the STA 123 is the receiver (Rx) of PRF2. The settings of the fields or elements in the Probe Response frame can refer to the previous description and are not repeated here.

The AP 121 transmits a QoS Null frame to the STA 123 on the secondary channel CH3, and the STA 123 responds to the AP 121 with an ACK frame on the secondary channel CH3. The STA 123 responds to the AP 121 with the ACK frame on the secondary channel CH3, indicating that the STA 123 has successfully switched to the secondary channel CH3 for operation.

The AP 121 transmits a DSO frame to the STA 124 on the primary channel CH1, instructing the STA 124 to switch from the primary channel CH1 to the secondary channel CH2. That is, the AP 121 is the transmitter (Tx) of the DSO frame, and the STA 124 is the receiver (Rx) of the DSO frame. The settings of the fields or elements in the DSO frame can refer to the previous description and are not repeated here.

The AP 121 does not confirm or check whether the STA 124 has successfully switched to the secondary channel CH2. In some embodiments, the AP 121 directly transmits a data frame to the STA 124 on the secondary channel CH2, or the STA 124 directly transmits a data frame to the AP 121 in response to switching to the secondary channel CH2.

Upon completion of data transmission with the AP 121 on the secondary channel CH2, the STA 124 automatically switches back from the secondary channel CH2 to the primary channel CH1 at the end of the current TXOP.

The AP 121 transmits a Channel Switch Announcement frame 1 (abbreviated as CSAF1) to the STA 122 on the secondary channel CH4, instructing the STA 122 to switch from the secondary channel CH4 to the primary channel CH1.

The AP 121 transmits an Extended Channel Switch Announcement frame 1 (abbreviated as ECSAF1) to the STA 123 on the secondary channel CH3, instructing the STA 123 to switch from the secondary channel CH3 to the secondary channel CH4.

In summary, the method according to the present disclosure supports both the legacy device and the new-standard device to switch to the secondary channels for operation, respectively, enabling flexible switching of the operating channels of the legacy and new-standard devices without changing the primary channel of the BSS. The full utilization of the large bandwidth characteristics of future UHR technology is not only conductive to alleviating the load on the primary channel but also improving channel utilization rate, particularly the utilization rate of the secondary channel, thus reducing resource waste. Moreover, the AP may directly transmit data with the STA on the secondary channel without confirming whether the STA has switched to the secondary channel, simplifying the channel switching process and improving overall data transmission efficiency. Furthermore, the STA is supported to automatically switch back to the primary channel upon completion of data transmission on the secondary channel, greatly enhancing the flexibility of channel usage.

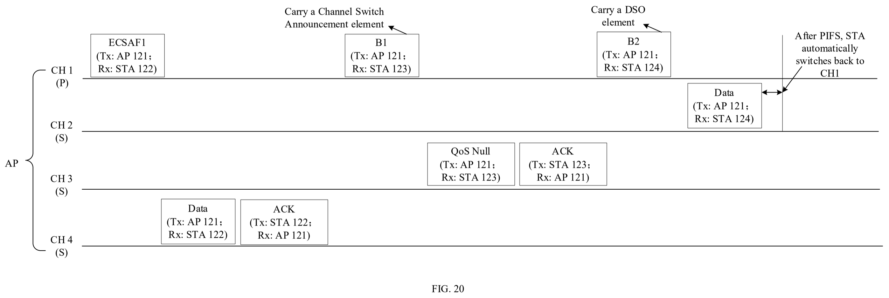

FIG. 20 is a schematic diagram of a channel switching method according to some exemplary embodiments of the present disclosure. Description is given hereinafter using an example where the method is performed by an AP and STAs.

The BSS includes one AP and at least one STA, such as an AP 121, an STA 122, an STA 123, and an STA 124. The AP 121 obtains the right to use a wide bandwidth channel. For example, the total bandwidth of the channel obtained by the AP 121 is 40 MHz, 80 MHz, 160 MHz, 320 MHz, or 480 MHz, or the like, which may include at least two channels. The bandwidths of the at least two channels may be the same or different, and one of the at least two channels is the primary channel. For example, the at least two channels include: two 20 MHz channels, four 20 MHz channels, eight 20 MHz channels, eight 40 MHz channels, sixteen 20 MHz channels, twenty-four 20 MHz channels, or three 20 MHz channels plus one 40 MHz channel, or the like.

Description is given hereinafter using an example where the AP has obtained the usage rights of four 40 MHz channels (i.e., having 160 MHz total bandwidth).

In the initial state, all STAs (i.e., the STA 122, the STA 123, and the STA 124) in the BSS operate on the primary channel CH1. Exemplarily, the STA 122 is an HT STA or VHT STA, the STA 123 is an HE STA or EHT STA, and the STA 124 is a UHR STA.

When there are many devices operating on the primary channel CH1 or the primary channel is congested, the AP 121 assigns some or all STAs to operate on secondary channels to reduce the load pressure on the primary channel.

The AP 121 transmits an Extended Channel Switch Announcement frame 1 (abbreviated as ECSAF1) to the STA 122 on the primary channel CH1, instructing the STA 122 to switch from the primary channel CH1 to the secondary channel CH4. That is, the AP 121 is the transmitter (Tx) of ECSAF1, and the STA 122 is the receiver (Rx) of ECSAF 1. The settings of the fields or elements in the Extended Channel Switch Announcement frame can refer to the previous description and are not repeated herein.

The AP 121 does not confirm or check whether the STA 122 has successfully switched to the secondary channel CH4. In some embodiments, the AP 121 directly transmits a data frame to the STA 122 on the secondary channel CH4, or the STA 122 directly transmits a data frame to the AP 121 in response to switching to the secondary channel CH4.

The AP 121 actively transmits a Beacon frame 1 (abbreviated as Bl) carrying a Channel Switch Announcement element to the STA 123 on the primary channel CH1, instructing the STA 123 to switch from the primary channel CH1 to the secondary channel CH3. That is, the AP 121 is the transmitter (Tx) of B1, and the STA 123 is the receiver (Rx) of B1. The settings of the Channel Switch Announcement element can refer to the previous description and are not repeated here.

The AP 121 transmits a QoS Null frame to the STA 123 on the secondary channel CH3, and the STA 123 responds to the AP 121 with an ACK frame on the secondary channel CH3. The STA 123 responds to the AP 121 with the ACK frame on the secondary channel CH3, indicating that the STA 123 has successfully switched to the secondary channel CH3 for operation.

The AP 121 transmits a Beacon frame 2 (abbreviated as B2) carrying a DSO Element to the STA 124 on the primary channel CH1, instructing the STA 124 to switch from the primary channel CH1 to the secondary channel CH2. That is, the AP 121 is the transmitter (Tx) of B2, and the STA 124 is the receiver (Rx) of B2. The settings of the DSO element can refer to the previous description and are not repeated herein.

The AP 121 does not confirm or check whether the STA 124 has successfully switched to CH2. In some embodiments, the AP 121 directly transmits a data frame to the STA 124 on the secondary channel CH2, or the STA 124 directly transmits a data frame to the AP 121 in response to switching to the secondary channel CH2.

Upon completion of data transmission with the AP 121 on the secondary channel CH2, the STA 124 automatically switches back from the secondary channel CH2 to the primary channel CH1 after a PIFS.

The AP 121 transmits a Channel Switch Announcement frame 1 (abbreviated as CSAF1) to the STA 122 on the secondary channel CH4, instructing the STA 122 to switch from the secondary channel CH4 to the primary channel CH1.

The AP 121 transmits an Extended Channel Switch Announcement frame 1 (abbreviated as ECSAF1) to the STA 123 on the secondary channel CH3, instructing the STA 123 to switch from the secondary channel CH3 to the secondary channel CH4.

In summary, the method according to the present disclosure supports both the legacy device and the new-standard device to switch to the secondary channels for operation, respectively, enabling flexible switching of the operating channels of the legacy and new-standard devices without changing the primary channel of the BSS. The full utilization of the large bandwidth characteristics of future UHR technology is not only conductive to alleviating the load on the primary channel but also to improving channel utilization rate, particularly the utilization rate of the secondary channel, thus reducing resource waste. Moreover, the AP may directly transmit data with the STA on the secondary channel without confirming whether the STA has switched to the secondary channel, simplifying the channel switching process and improving overall data transmission efficiency. Furthermore, the STA is supported to automatically switch back to the primary channel upon completion of data transmission on the secondary channel, greatly enhancing the flexibility of channel usage. The design of the DSO element enables a frame carrying the DSO element to combine the functions of the Probe Response frame and the DSO frame, reducing signaling overhead.

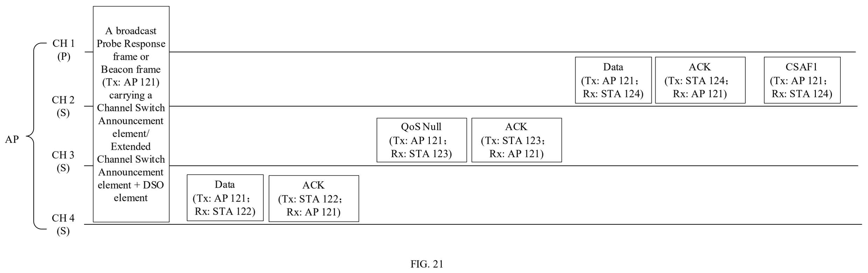

FIG. 21 is a schematic diagram of a channel switching method according to some exemplary embodiments of the present disclosure. Description is given hereinafter using an example where the method is performed by an AP and STAs.

The BSS includes one AP and at least one STA, such as an AP 121, an STA 122, an STA 123, and an STA 124. The AP 121 obtains the right to use a wide bandwidth channel. For example, the total bandwidth of the channel obtained by AP 121 is 40 MHz, 80 MHz, 160 MHz, 320 MHz, or 480 MHz, or the like, which may include at least two channels. The bandwidths of the at least two channels may be the same or different, and one of the at least two channels is the primary channel. For example, the at least two channels include: two 20 MHz channels, four 20 MHz channels, eight 20 MHz channels, eight 40 MHz channels, sixteen 20 MHz channels, twenty-four 20 MHz channels, or three 20 MHz channels plus one 40 MHz channel, or the like.

Description is given hereinafter using an example where the AP has obtained the usage rights of four 40 MHz channels (i.e., having 160 MHz total bandwidth).

In the initial state, all STAs (i.e., the STA 122, the STA 123, and the STA 124) in the BSS operate on the primary channel CH1. Exemplarily, the STA 122 is an HT STA or VHT STA, the STA 123 is an HE STA or EHT STA, and the STA 124 is a UHR STA.

When there are many devices operating on the primary channel CH1 or the primary channel is congested, the AP 121 assigns some or all STAs to operate on secondary channels to reduce the load pressure on the primary channel.

The AP 121 actively broadcasts a Probe Response frame or Beacon frame that carries both a Channel Switch Announcement element and a DSO element, or both an Extended Channel Switch Announcement element and the DSO element.

The STA 122 receives the Probe Response frame or Beacon frame and switches from the primary channel CH1 to the secondary channel CH4 based on the settings of the Channel Switch Announcement element or Extended Channel Switch Announcement element.

The STA 123 receives the Probe Response frame or Beacon frame and switches from the primary channel CH1 to the secondary channel CH3 based on the settings of the Channel Switch Announcement element or Extended Channel Switch Announcement element.

The STA 124 receives the Probe Response frame or Beacon frame and switches from the primary channel CH1 to the secondary channel CH2 based on the settings of the DSO element.

The AP 121 does not confirm or check whether the STA 122 has successfully switched to the secondary channel CH4. In some embodiments, the AP 121 directly transmits a data frame to the STA 122 on the secondary channel CH4, or the STA 122 directly transmits a data frame to the AP 121 in response to switching to the secondary channel CH4.

The AP 121 transmits a QoS Null frame to the STA 123 on the secondary channel CH3, and the STA 123 responds to the AP 121 with an ACK frame on the secondary channel CH3. The STA 123 responds to the AP 121 with the ACK frame on the secondary channel CH3, indicating that the STA 123 has successfully switched to the secondary channel CH3 for operation.

The AP 121 does not confirm or check whether the STA 124 has successfully switched to the secondary channel CH2. In some embodiments, the AP 121 directly transmits a data frame to the STA 124 on the secondary channel CH2, or the STA 124 directly transmits a data frame to the AP 121 in response to switching to the secondary channel CH2.

The AP 121 transmits a Channel Switch Announcement frame 1 (abbreviated as CSAF1) to the STA 124 on the secondary channel CH2, instructing the STA 124 to switch back from the secondary channel CH2 to the primary channel CH1.

In summary, the method according to the present disclosure supports both the legacy device and the new-standard device to switch to secondary channels for operation, respectively, enabling flexible switching of the operating channels of legacy and new-standard devices without changing the primary channel of the BSS. The full utilization of the large bandwidth characteristics of future UHR technology is not only conductive to alleviating the load and interference on the primary channel but also to improving channel utilization rate, particularly the utilization rate of secondary channels, thus reducing resource waste. Moreover, the AP may directly transmit data with the STA on the secondary channel without confirming whether the STA has switched to the secondary channel, simplifying the channel switching process and improving overall data transmission efficiency. The design of the DSO element enables a frame carrying the DSO element to combine the functions of the Probe Response frame and the DSO frame, reducing signaling overhead. Additionally, the method of enabling the STA to perform channel switching is achieved through the AP broadcasting the Beacon frame or Probe Response frame. Since the Beacon frame or Probe Response frame carries a plurality of elements related to channel switching, different STAs is capable of performing channel switching based on different elements, which significantly reduces signaling overhead and enhances the simplicity of channel switching.

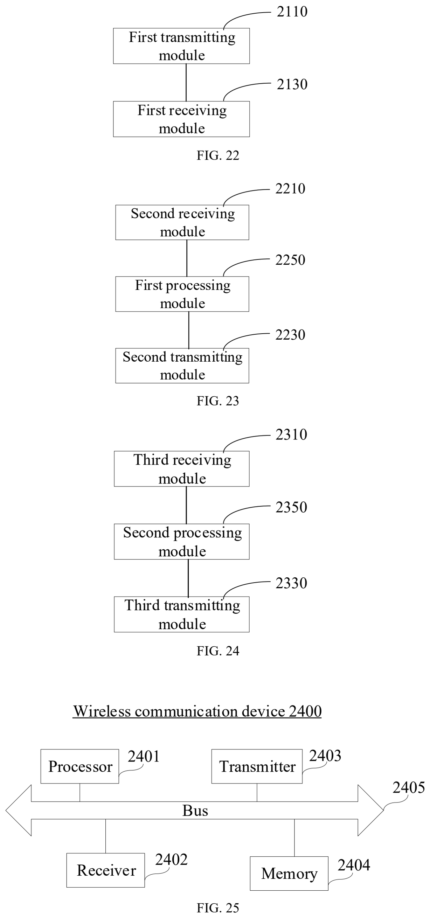

FIG. 22 is a block diagram of a structure of a channel switching apparatus according to some exemplary embodiments of the present disclosure. The apparatus includes at least a portion of a first transmitting module 2110 and a first receiving module 2130 as described hereinafter.

The first transmitting module 2110 is configured to transmit, on a primary channel, a first frame to an STA, where the first frame is configured to instruct the first STA to switch from the primary channel to a first secondary channel.

In some embodiments, the first transmitting module 2110 is further configured to transmit, on the primary channel, a second frame to a second STA, where the second frame is configured to instruct the second STA to switch from the primary channel to a second secondary channel.

In some embodiments, a standard of the first STA is different from a standard of the second STA.

In some embodiments, the standard of the first STA includes at least one of: 802.11ax, 802.11ac, 802.11n, 802.11g, 802.11b, 802.11a, or 802.11be; and the standard of the second STA includes a standard corresponding to a UHR STA.

In some embodiments, a standard of the first STA is the same as a standard of the second STA.

In some embodiments, the standard of the first STA includes at least one of: 802.11ax, 802.11ac, 802.11n, 802.11g, 802.11b, 802.11a, 802.11be, or a standard corresponding to an UHR STA; and the standard of the second STA includes at least one of: 802.11ax, 802.11ac, 802.11n, 802.11g, 802.11b, 802.11a, 802.11be, or the standard corresponding to the UHR STA.

In some embodiments, the second frame includes at least one of: a subband-switch control frame, an MU-RTS frame, a BSRP frame, a Beacon frame carrying a DSO element, a Probe Response frame carrying a DSO element, a Probe Response frame carrying a DSO element and a Channel Switch Announcement element, a Probe Response frame carrying a DSO element and an Extended Channel Switch Announcement element, a Beacon frame carrying a DSO element and a Channel Switch Announcement element, or a Beacon frame carrying a DSO element and an Extended Channel Switch Announcement element.

In some embodiments, the first transmitting module 2110 is further configured to transmit, on the second secondary channel, a third frame to the second STA, where the second secondary channel includes at least one secondary channel on which the AP operates.

In some embodiments, the first transmitting module 2110 is further configured to transmit, on the second secondary channel, the third frame to the second STA after an SIFS following the transmission of the second frame to the second STA on the primary channel; or transmit, on the second secondary channel, the third frame to the second STA after a first time interval following the transmission of the second frame to the second STA on the primary channel; wherein the first time interval is longer than the SIFS.

In some embodiments, the apparatus further includes the first receiving module 2130 configured to receive, on the second secondary channel, a fourth frame in response from the second STA; or receive, on at least one subchannel of the second secondary channel, the fourth frame in response from the second STA.

In some embodiments, the first transmitting module 2110 is further configured to transmit a third frame to the second STA via dynamic puncturing.

In some embodiments, the first transmitting module 2110 is further configured to transmit the third frame to the second STA via dynamic puncturing after an SIFS following the transmission of the second frame to the second STA on the primary channel; or transmit the third frame to the second STA via dynamic puncturing after a first time interval following the transmission of the second frame to the second STA on the primary channel; wherein the first time interval is longer than the SIFS.

In some embodiments, the first receiving module 2130 is further configured to receive, on the second secondary channel, a fourth frame in response from the second STA.

In some embodiments, the first transmitting module 2110 is further configured to transmit, on the first secondary channel, a third frame to the first STA, wherein the first secondary channel includes at least one secondary channel on which the AP operates.

In some embodiments, the first transmitting module 2110 is further configured to transmit, on the first secondary channel, the third frame to the first STA after an SIFS following the transmission of the first frame to the first STA on the primary channel; or transmit, on the first secondary channel, the third frame to the first STA after a first time interval following the transmission of the first frame to the first STA on the primary channel; wherein the first time interval is longer than the SIFS.

In some embodiments, the first receiving module 2130 is further configured to receive, on the first secondary channel, a fourth frame in response from the first STA.

In some embodiments, the first transmitting module 2110 is further configured to transmit a third frame to the first STA via dynamic puncturing.

In some embodiments, the first transmitting module 2110 is further configured to transmit the third frame to the first STA via dynamic puncturing after an SIFS following the transmission of the first frame to the first STA on the primary channel; or transmit the third frame to the first STA via dynamic puncturing after a first time interval following the transmission of the first frame to the first STA on the primary channel; wherein the first time interval is longer than the SIFS.

In some embodiments, the first receiving module 2130 is further configured to receive, on the first secondary channel, a fourth frame in response from the first STA.

In some embodiments, the third frame includes an RTS frame, an MU-RTS frame, or a QoS Null frame.

In some embodiments, the fourth frame includes a CTS frame, an ACK frame, or a BA frame.

In some embodiments, the first transmitting module 2110 is further configured to transmit, on the second secondary channel, a fifth frame to the second STA, wherein the fifth frame is configured to instruct the second STA to switch from the second secondary channel to the primary channel.

In some embodiments, the fifth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, or a Beacon frame carrying an Extended Channel Switch Announcement element.

In some embodiments, the first transmitting module 2110 is further configured to transmit, on the first secondary channel, a sixth frame to the first STA, wherein the sixth frame is configured to instruct the first STA to switch from the first secondary channel to the primary channel.

In some embodiments, the sixth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, or a Beacon frame carrying an Extended Channel Switch Announcement element.

In some embodiments, the first frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, or a Beacon frame carrying an Extended Channel Switch Announcement element.

In some embodiments, the first frame includes at least one of: a Channel Switch Mode field, a New Channel Number field, or a Channel Switch Count field.

In some embodiments, the first frame includes the Channel Switch Mode field; in a case where the Channel Switch Mode field is set to a first value, the Channel Switch Mode field is configured to instruct the first STA to immediately stop transmitting any frame upon receiving the first frame; in a case where the Channel Switch Mode field is set to a second value, the Channel Switch Mode field does not impose any requirement on the first STA.

In some embodiments, the first frame includes the New Channel Number field; and the New Channel Number is configured to indicate the first secondary channel.

In some embodiments, the first frame includes the Channel Switch Count field, and the Channel Switch Count field is set to a third value; and the Channel Switch Count field is configured to instruct the first STA to switch to the first secondary channel within a current TXOP in response to receiving the first STA.

In some embodiments, the first transmitting module 2110 is further configured to transmit the first frame via at least one of: unicast, multicast, or broadcast.

In some embodiments, the first receiving module 2130 is further configured to receive a Probe Request frame from the first STA.

In summary, the method according to the present disclosure supports both the legacy device and the new-standard device to switch to the secondary channel for operation respectively, as well as switching back to the primary channel for operation respectively. The flexible switching of the operating channels of the legacy device and the new-standard device is enabled without changing the primary channel of the BSS. The full utilization of the large bandwidth characteristics of future UHR technology is not only conducive to alleviating the load on the primary channel but also to improving channel utilization rate, particularly the utilization rate of the secondary channel, thus reducing resource waste. Moreover, the STA is supported to switch back to the primary channel for operation, thereby avoiding situations where the STA is unable to detect control frames and/or management frames sent by the AP on the secondary channel. This ensures that the STA operates normally during the flexible switching of channels.

FIG. 23 is a block diagram of a structure of a channel switching apparatus according to some exemplary embodiments of the present disclosure. The apparatus includes at least a portion of a second receiving module 2210, a second transmitting module 2230, and a first processing module 2250 as described hereinafter.

The second receiving module 2210 is configured to receive, on a primary channel, a first frame from an AP, wherein the first frame is configured to instruct the first STA to switch from the primary channel to a first secondary channel.

In some embodiments, a standard of the first STA includes at least one of: 802.11ax, 802.11ac, 802.11n, 802.11g, 802.11b, 802.11a, 802.11be, or a standard corresponding to an UHR STA.

In some embodiments, the second receiving module 2210 is further configured to receive, on the first secondary channel, a third frame from the AP, wherein the first secondary channel includes at least one secondary channel on which the AP operates.

In some embodiments, the third frame includes an RTS frame, an MU-RTS frame, or a QoS Null frame.

In some embodiments, the apparatus further includes the second transmitting module 2230 configured to respond to the AP with a fourth frame on the first secondary channel; or to respond the AP with the fourth frame on at least one subchannel of the first secondary channel.

In some embodiments, the fourth frame includes: a CTS frame, an ACK frame, or a BA frame.

In some embodiments, the second receiving module 2210 is further configured to receive, on the first secondary channel, a sixth frame from the AP, wherein the sixth frame is configured to instruct the first STA to switch from the first secondary channel to the primary channel.

In some embodiments, the sixth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, or a Beacon frame carrying an Extended Channel Switch Announcement element.

In some embodiments, the apparatus further includes the first processing module 2250 configured to switch from the first secondary channel to the primary channel, and/or, to switch from the primary channel to the first secondary channel.

In some embodiments, the first frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, or a Beacon frame carrying an Extended Channel Switch Announcement element.

In some embodiments, the first frame includes at least one of: a Channel Switch Mode field, a New Channel Number field, or a Channel Switch Count field.

In some embodiments, the first frame includes the Channel Switch Mode field; wherein in a case where the Channel Switch Mode field is set to a first value, the Channel Switch Mode field is configured to instruct the first STA to immediately stop transmitting any frame upon receiving the first frame; in a case where the Channel Switch Mode field is set to a second value, the Channel Switch Mode field does not impose any requirement on the first STA.

In some embodiments, the first frame includes the New Channel Number; and the New Channel Number field is configured to indicate the first secondary channel.

In some embodiments, the first frame includes the Channel Switch Count field, and the Channel Switch Count field is set to a third value; and the Channel Switch Count field is configured to instruct the first STA to switch to the first secondary channel within a current TXOP in response to receiving the first STA.

In some embodiments, the first frame is transmitted via at least one of: unicast, multicast, or broadcast.

In some embodiments, the second transmitting module 2230 is further configured to transmit a Probe Request frame to the AP.

In summary, the apparatus according to the present disclosure is capable of performing flexible channel switching. Since the apparatus may include the legacy device, or the apparatus may also include the new-standard device, the flexible switching of operating channels of the legacy device or the new-standard device is enabled without changing the primary channel of the BSS. This is not only conducive to alleviating the load and interference on the primary channel but also to improving channel utilization rate, particularly the utilization rate of secondary channels, thus reducing resource waste. Moreover, the interaction between the third and fourth frames facilitates the confirmation of the completion status of the channel switching by the apparatus, and avoids the hidden terminal problem, thereby improving the reliability and stability of transmission. Furthermore, the apparatus is supported to switch back to the primary channel for operation, which avoids the situation where the apparatus cannot detect the control frames and/or management frames sent by the AP on the secondary channel, ensuring that the apparatus can operate normally during the flexible switching of channels.

FIG. 24 shows a block diagram of a structure of a channel switching apparatus according to some exemplary embodiments of the present disclosure. The apparatus includes at least a portion of a third receiving module 2310, a third transmitting module 2330, and a second processing module 2350 as described hereinafter.

The third receiving module 2310 is configured to receive, on a primary channel, a second frame from an AP, where the second frame is configured to instruct the second STA to switch from the primary channel to a second secondary channel.

In some embodiments, a standard of the second STA includes at least one of: 802.11ax, 802.11ac, 802.11n, 802.11g, 802.11b, 802.11a, 802.11be, or a standard corresponding to a UHR STA.

In some embodiments, the third receiving module 2310 is further configured to receive, on the second secondary channel, a third frame from the AP, wherein the second secondary channel includes at least one secondary channel on which the AP operates.

In some embodiments, the third frame includes: an RTS frame, an MU-RTS frame, or a QoS Null frame.

In some embodiments, the apparatus further includes the third transmitting module 2330 configured to respond to the AP with a fourth frame on the second secondary channel; or respond to the AP with the fourth frame on at least one subchannel of the second secondary channel.

In some embodiments, the fourth frame includes: a CTS frame, an ACK frame, or a BA frame.

In some embodiments, the third receiving module 2310 is further configured to receive, on the second secondary channel, a fifth frame from the AP, wherein the fifth frame is configured to instruct the second STA to switch from the second secondary channel to the primary channel.

In some embodiments, the fifth frame includes at least one of: a Channel Switch Announcement frame, an Extended Channel Switch Announcement frame, a Probe Response frame carrying a Channel Switch Announcement element, a Probe Response frame carrying an Extended Channel Switch Announcement element, a Beacon frame carrying a Channel Switch Announcement element, or a Beacon frame carrying an Extended Channel Switch Announcement element.

In some embodiments, the apparatus further includes the second processing module 2350 configured to switch from the second secondary channel to the primary channel, and/or to switch from the primary channel to the second secondary channel.

In some embodiments, the second frame includes at least one of: a subband-switch control frame, an MU-RTS frame, a BSRP frame, a Beacon frame carrying a DSO element, a Probe Response frame carrying a DSO element, a Probe Response frame carrying a DSO element and a Channel Switch Announcement element, a Probe Response frame carrying a DSO element and an Extended Channel Switch Announcement element, a Beacon frame carrying a DSO element and a Channel Switch Announcement element, or a Beacon frame carrying a DSO element and an Extended Channel Switch Announcement element.

In some embodiments, the second frame is transmitted via at least one of: unicast, multicast, or broadcast.

In some embodiments, the third transmitting module 2330 is further configured to transmit a Probe Request frame to the AP.

In summary, the apparatus according to the present disclosure is capable of performing flexible channel switching. Since the apparatus may include the legacy device, or may also include the new-standard device, the flexible switching of operating channels of the legacy device or the new-standard device is enabled without changing the primary channel of the BSS. This is not only conducive to alleviating the load and interference on the primary channel but also to improving channel utilization rate, particularly the utilization rate of secondary channels, thus reducing resource waste. Moreover, the interaction between the third and fourth frames facilitates the confirmation of the completion status of the channel switching by the apparatus, and avoids the hidden terminal problem, thereby improving the reliability and stability of transmission. Moreover, newly designed DSO frames and DSO elements are provided, making the channel switching of the apparatus more flexible and convenient, and improving the spectral utilization rate. Furthermore, the apparatus is supported to switch back to the primary channel for operation, which avoids the situation where the apparatus cannot detect the control frames and/or management frames sent by the AP on the secondary channel, ensuring that the apparatus can operate normally during the flexible switching of channels.

It should be noted that the apparatus according to the above embodiments is illustrated merely by way of example based on the division of the functional modules mentioned above. In practical applications, these functions may be distributed among different functional modules as needed. That is, the device may be divided into various functional modules to accomplish all or part of the functions described above.

The specific ways in which each module in the device of this embodiment performs operations have been described in detail in the embodiments related to the method, and thus are not elaborated upon here.

FIG. 25 is a schematic structural diagram of a wireless communication device (AP or STA) according to some exemplary embodiments of the present disclosure. The wireless communication device 2400 includes: a processor 2401, a receiver 2402, a transmitter 2403, a memory 2404, and a bus 2405.

The processor 2401 includes one or more processing cores. By running software programs and modules, the processor 2401 executes various functional applications and information processing. In some embodiments, the processor 2401 may be configured to implement the functions and steps of the aforementioned first processing module 2250 and/or the second processing module 2350.

The receiver 2402 and the transmitter 2403 may be implemented as a single communication component, which may be a communication chip. In some embodiments, the receiver 2402 may be configured to implement the functions and steps of the aforementioned first receiving module 2130, and/or, the second receiving module 2210, and/or, the third receiving module 2310. In some embodiments, the transmitter 2403 may be configured to implement the functions and steps of the first transmitting module 2110 and/or the second transmitting module 2230 and/or the third transmitting module 2330.

The memory 2404 is connected to the processor 2401 via the bus 2405. The memory 2404 may be configured to store at least one instruction. The processor 2401 is configured to execute the at least one instruction to perform the various steps in the method embodiments described above.

Furthermore, the memory 2404 may be implemented by any type of volatile or non-volatile storage device or a combination thereof, including but not limited to: a magnetic or optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 2402 independently receives signals/data, or the processor 2401 controls the receiver 2402 to receive signals/data, or the processor 2401 requests the receiver 2402 to receive signals/data, or the processor 2401 cooperates with the receiver 2402 to receive signals/data.

In some embodiments, the transmitter 2403 independently transmits signals/data, or the processor 2401 controls the transmitter 2403 to transmit signals/data, or the processor 2401 requests the transmitter 2403 to transmit signals/data, or the processor 2401 cooperates with the transmitter 2403 to transmit signals/data.

In an exemplary embodiment of the present disclosure, a computer-readable storage medium is also provided. The computer-readable storage medium stores at least one program, which is loaded and executed by the processor to perform the channel switching method according to the above method embodiments.

In an exemplary embodiment of the present disclosure, a chip is also provided. The chip includes a programmable logic circuit and/or a program instruction. When the chip runs on a communication device, the chip is used to perform the channel switching method according to the aforementioned method embodiments.

In an exemplary embodiment of the present disclosure, a computer program product is also provided. The computer program product runs on a processor of a computer device, causing the computer device to perform the aforementioned channel switching method.

In an exemplary embodiment of the present disclosure, a computer program is also provided. The computer program includes one or more computer instructions, when executed by a processor of a computer device, cause the computer device to perform the aforementioned channel switching method.

A person skilled in the art should be aware that in the foregoing one or more examples, the functions described in the embodiments of the present disclosure can be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

It should be understood that the frame formats and element formats illustrated in the embodiments of the present disclosure are exemplary. In different embodiments or designs, it is not excluded situations in which at least one of the designs of the position of each field within the frames/elements, the arrangement order of the field with other fields, the number of bytes occupied by the field, or the number of bits occupied by the field changes. The present disclosure does not impose specific limitations on the formats of these frames and elements.

Described above are merely optional embodiments of the present disclosure and are not used to limit the present disclosure. Any modifications, equivalent substitutions, improvements, and the like made within the spirit and principles of the present disclosure shall be included within the protection scope of the present disclosure.

## Claims

1. A channel switching method, performed by an access point, AP, the method comprising:
transmitting, on a primary channel, a first frame to a first station, STA, wherein the first frame is configured to instruct the first STA to switch from the primary channel to a first secondary channel.

2. The method according to claim 1, further comprising:
transmitting, on the primary channel, a second frame to a second STA, wherein the second frame is configured to instruct the second STA to switch from the primary channel to a second secondary channel.

3. The method according to claim 2, wherein a standard of the first STA is different from a standard of the second STA.

4. The method according to claim 3, wherein
the standard of the first STA comprises at least one of: 802.11ax, 802.11ac, 802.11n, 802.11g, 802.11b, 802.11a, or 802.11be; and
the standard of the second STA comprises a standard corresponding to an ultra-high reliability, UHR, STA.

5. The method according to claim 2, wherein a standard of the first STA is the same as a standard of the second STA.

6. The method according to claim 5, wherein
the standard of the first STA comprises at least one of: 802.11ax, 802.11ac, 802.11n, 802.11g, 802.11b, 802.11a, 802.11be, or a standard corresponding to an ultra-high reliability, UHR, STA; and
the standard of the second STA comprises at least one of: 802.11ax, 802.11ac, 802.11n, 802.11g, 802.11b, 802.11a, 802.11be, or the standard corresponding to the UHR STA.

7. The method according to any one of claims 2 to 6, wherein the second frame comprises at least one of:
a subband-switch control frame;
a Multiuser Request-to-Send, MU-RTS, frame;
a Buffer Status Report Polling, BSRP, frame;
a Beacon frame carrying a Dynamic Subband Operation, DSO, element;
a Probe Response frame carrying a DSO element;
a Probe Response frame carrying a DSO element and a Channel Switch Announcement element;
a Probe Response frame carrying a DSO element and an Extended Channel Switch Announcement element;
a Beacon frame carrying a DSO element and a Channel Switch Announcement element; or
a Beacon frame carrying a DSO element and an Extended Channel Switch Announcement element.

8. The method according to any one of claims 2 to 7, further comprising:
transmitting, on the second secondary channel, a third frame to the second STA, wherein the second secondary channel comprises at least one secondary channel on which the AP operates.

9. The method according to claim 8, wherein transmitting, on the second secondary channel, the third frame to the second STA comprises:
transmitting, on the second secondary channel, the third frame to the second STA after a short interframe space, SIFS, following the transmission of the second frame to the second STA on the primary channel; or
transmitting, on the second secondary channel, the third frame to the second STA after a first time interval following the transmission of the second frame to the second STA on the primary channel;
wherein the first time interval is longer than the SIFS.

10. The method according to claim 8 or 9, further comprising:
receiving, on the second secondary channel, a fourth frame in response from the second STA; or
receiving, on at least one subchannel of the second secondary channel, the fourth frame in response from the second STA.

11. The method according to any one of claims 2 to 7, further comprising:
transmitting a third frame to the second STA via dynamic puncturing.

12. The method according to claim 11, wherein transmitting the third frame to the second STA via dynamic puncturing comprises:
transmitting the third frame to the second STA via dynamic puncturing after a short interframe space, SIFS, following the transmission of the second frame to the second STA on the primary channel; or
transmitting the third frame to the second STA via dynamic puncturing after a first time interval following the transmission of the second frame to the second STA on the primary channel;
wherein the first time interval is longer than the SIFS.

13. The method according to claim 11 or 12, further comprising:
receiving, on the second secondary channel, a fourth frame in response from the second STA.

14. The method according to any one of claims 1 to 13, further comprising:
transmitting, on the first secondary channel, a third frame to the first STA, wherein the first secondary channel comprises at least one secondary channel on which the AP operates.

15. The method according to claim 14, wherein transmitting, on the first secondary channel, the third frame to the first STA comprises:
transmitting, on the first secondary channel, the third frame to the first STA after a short interframe space, SIFS, following the transmission of the first frame to the first STA on the primary channel; or
transmitting, on the first secondary channel, the third frame to the first STA after a first time interval following the transmission of the first frame to the first STA on the primary channel;
wherein the first time interval is longer than the SIFS.

16. The method according to claim 14 or 15, further comprising:
receiving, on the first secondary channel, a fourth frame in response from the first STA.

17. The method according to any one of claims 1 to 13, further comprising:
transmitting a third frame to the first STA via dynamic puncturing.

18. The method according to claim 17, wherein transmitting the third frame to the first STA via dynamic puncturing comprises:
transmitting the third frame to the first STA via dynamic puncturing after a short interframe space, SIFS, following the transmission of the first frame to the first STA on the primary channel; or
transmitting the third frame to the first STA via dynamic puncturing after a first time interval following the transmission of the first frame to the first STA on the primary channel;
wherein the first time interval is longer than the SIFS.

19. The method according to claim 17 or 18, further comprising:
receiving, on the first secondary channel, a fourth frame in response from the first STA; or
receiving, on at least one subchannel of the first secondary channel, the fourth frame in response from the first STA.

20. The method according to any one of claims 8 to 19, wherein the third frame comprises a Request-to-Send, RTS, frame, a Multiuser RTS, MU-RTS, frame, or a Quality of Service, QoS, Null frame.

21. The method according to claim 10, 13, 16, or 19, wherein the fourth frame comprises a Clear-to-Send, CTS, frame, an Acknowledgment, ACK, frame, or a Block ACK, BA, frame.

22. The method according to any one of claims 2 to 21, further comprising:
transmitting, on the second secondary channel, a fifth frame to the second STA, wherein the fifth frame is configured to instruct the second STA to switch from the second secondary channel to the primary channel.

23. The method according to claim 22, wherein the fifth frame comprises at least one of:
a Channel Switch Announcement frame;
an Extended Channel Switch Announcement frame;
a Probe Response frame carrying a Channel Switch Announcement element;
a Probe Response frame carrying an Extended Channel Switch Announcement element;
a Beacon frame carrying a Channel Switch Announcement element; or
a Beacon frame carrying an Extended Channel Switch Announcement element.

24. The method according to any one of claims 1 to 23, further comprising:
transmitting, on the first secondary channel, a sixth frame to the first STA, wherein the sixth frame is configured to instruct the first STA to switch from the first secondary channel to the primary channel.

25. The method according to claim 24, wherein the sixth frame comprises at least one of:
a Channel Switch Announcement frame;
an Extended Channel Switch Announcement frame;
a Probe Response frame carrying a Channel Switch Announcement element;
a Probe Response frame carrying an Extended Channel Switch Announcement element;
a Beacon frame carrying a Channel Switch Announcement element; or
a Beacon frame carrying an Extended Channel Switch Announcement element.

26. The method according to any one of claims 1 to 25, wherein the first frame comprises at least one of:
a Channel Switch Announcement frame;
an Extended Channel Switch Announcement frame;
a Probe Response frame carrying a Channel Switch Announcement element;
a Probe Response frame carrying an Extended Channel Switch Announcement element;
a Beacon frame carrying a Channel Switch Announcement element; or
a Beacon frame carrying an Extended Channel Switch Announcement element.

27. The method according to claim 26, wherein the first frame comprises at least one of: a Channel Switch Mode field, a New Channel Number field, or a Channel Switch Count field.

28. The method according to claim 27, wherein the first frame comprises the Channel Switch Mode field;
in a case where the Channel Switch Mode field is set to a first value, the Channel Switch Mode field is configured to instruct the first STA to immediately stop transmitting any frame upon receiving the first frame;
in a case where the Channel Switch Mode field is set to a second value, the Channel Switch Mode field does not impose any requirement on the first STA.

29. The method according to claim 27 or 28, wherein
the first frame comprises the New Channel Number field; and
the New Channel Number field is configured to instruct the first secondary channel.

30. The method according to any one of claims 26 to 29, wherein
the first frame comprises the Channel Switch Count field, and the Channel Switch Count field is set to a third value; and
the Channel Switch Count field is configured to instruct the first STA to switch to the first secondary channel within a current Transmission Opportunity, TXOP, in response to receiving the first STA.

31. The method according to any one of claims 1 to 30, wherein the first frame is transmitted via at least one of: unicast, multicast, or broadcast.

32. The method according to any one of claims 1 to 31, wherein, prior to transmitting, on the primary channel, the first frame to the first STA, the method further comprises:
receiving a Probe Request frame from the first STA.

33. A channel switching method, performed by a first Station, STA, the method comprising:
receiving, on a primary channel, a first frame from an Access Point, AP, wherein the first frame is configured to instruct the first STA to switch from the primary channel to a first secondary channel.

34. The method according to claim 33, wherein a standard of the first STA comprises at least one of: 802.1 1ax, 802.11ac, 802.11n, 802.11g, 802.1 1b, 802.11a, 802.11be, or a standard corresponding to an ultra-high reliability, UHR, STA.

35. The method according to claim 33 or 34, further comprising:
receiving, on the first secondary channel, a third frame from the AP, wherein the first secondary channel comprises at least one secondary channel on which the AP operates.

36. The method according to claim 35, wherein the third frame comprises: a Request-to-Send, RTS, frame, a Multiuser RTS, MU-RTS, frame, or a Quality of Service, QoS, Null frame.

37. The method according to claim 35 or 36, further comprising:
responding to the AP with a fourth frame on the first secondary channel; or
responding to the AP with the fourth frame on at least one subchannel of the first secondary channel.

38. The method according to claim 37, wherein the fourth frame comprises: a Clear-to-Send, CTS, frame, an Acknowledgment, ACK, frame, or a Block ACK, BA, frame.

39. The method according to any one of claims 33 to 38, further comprising:
receiving, on the first secondary channel, a sixth frame from the AP, wherein the sixth frame is configured to instruct the first STA to switch from the first secondary channel to the primary channel.

40. The method according to claim 39, wherein the sixth frame comprises at least one of:
a Channel Switch Announcement frame;
an Extended Channel Switch Announcement frame;
a Probe Response frame carrying a Channel Switch Announcement element;
a Probe Response frame carrying an Extended Channel Switch Announcement element;
a Beacon frame carrying a Channel Switch Announcement element; or
a Beacon frame carrying an Extended Channel Switch Announcement element.

41. The method according to any one of claims 33 to 40, further comprising:
switching from the first secondary channel to the primary channel.

42. The method according to any one of claims 33 to 41, wherein the first frame comprises at least one of:
a Channel Switch Announcement frame;
an Extended Channel Switch Announcement frame;
a Probe Response frame carrying a Channel Switch Announcement element;
a Probe Response frame carrying an Extended Channel Switch Announcement element;
a Beacon frame carrying a Channel Switch Announcement element; or
a Beacon frame carrying an Extended Channel Switch Announcement element.

43. The method according to claim 42, wherein the first frame comprises at least one of: a Channel Switch Mode field, a New Channel Number field, or a Channel Switch Count field.

44. The method according to claim 43, wherein the first frame comprises the Channel Switch Mode field; wherein
in a case where the Channel Switch Mode field is set to a first value, the Channel Switch Mode field is configured to instruct the first STA to stop immediately transmitting any frame upon receiving the first frame;
in a case where the Channel Switch Mode field is set to a second value, the Channel Switch Mode field does not impose any requirement on the first STA.

45. The method according to claim 43 or 44, wherein
the first frame comprises the New Channel Number; and
the New Channel Number field is configured to indicate the first secondary channel.

46. The method according to any one of claims 43 to 45, wherein
the first frame comprises the Channel Switch Count field, and the Channel Switch Count field is set to a third value; and
the Channel Switch Count field is configured to instruct the first STA to switch to the first secondary channel within a current Transmission Opportunity, TXOP, in response to receiving the first STA.

47. The method according to any one of claims 33 to 46, wherein the first frame is transmitted via at least one of: unicast, multicast, or broadcast.

48. The method according to any one of claims 33 to 47, wherein, prior to receiving, on the primary channel, the first frame from the AP, the method further comprises:
transmitting a Probe Request frame to the AP.

49. A channel switching method, performed by a second station, STA, the method comprising:
receiving, on a primary channel, a second frame from an access point, AP, wherein the second frame is configured to instruct the second STA to switch from the primary channel to a second secondary channel.

50. The method according to claim 49, wherein a standard of the second STA comprises at least one of: 802.11ax, 802.11ac, 802.11n, 802.11g, 802.11b, 802.11a, 802.11be, or a standard corresponding to an ultra-high teliability, UHR, STA.

51. The method according to claim 49 or 50, further comprising:
receiving, on the second secondary channel, a third frame from the AP, wherein the second secondary channel comprises at least one secondary channel on which the AP operates.

52. The method according to claim 51, wherein the third frame comprises: a Request-to-Send, RTS, frame, a Multiuser RTS, MU-RTS, frame, or a Quality of Service, QoS, Null frame.

53. The method according to claim 51 or 52, further comprising:
responding to the AP with a fourth frame on the second secondary channel; or
responding to the AP with the fourth frame on at least one subchannel of the second secondary channel.

54. The method according to claim 53, wherein the fourth frame comprises a Clear-to-Send, CTS, frame, an Acknowledgment, ACK, frame, or a Block ACK, BA, frame.

55. The method according to any one of claims 49 to 54, further comprising:
receiving, on the second secondary channel, a fifth frame from the AP, wherein the fifth frame is configured to instruct the second STA to switch from the second secondary channel to the primary channel.

56. The method according to claim 55, wherein the fifth frame comprises at least one of:
a Channel Switch Announcement frame;
an Extended Channel Switch Announcement frame;
a Probe Response frame carrying a Channel Switch Announcement element;
a Probe Response frame carrying an Extended Channel Switch Announcement element;
a Beacon frame carrying a Channel Switch Announcement element; or
a Beacon frame carrying an Extended Channel Switch Announcement element.

57. The method according to any one of claims 49 to 56, further comprising:
switching from the second secondary channel to the primary channel.

58. The method according to any one of claims 49 to 57, wherein the second frame comprises at least one of:
a subband-switch control frame;
a Multiuser Request-to-Send, MU-RTS, frame;
a Buffer Status Report Polling, BSRP, frame;
a Beacon frame carrying a Dynamic Subband Operation, DSO, element;
a Probe Response frame carrying a DSO element;
a Probe Response frame carrying a DSO element and a Channel Switch Announcement element;
a Probe Response frame carrying a DSO element and an Extended Channel Switch Announcement element;
a Beacon frame carrying a DSO element and a Channel Switch Announcement element; or
a Beacon frame carrying a DSO element and an Extended Channel Switch Announcement element.

59. The method according to any one of claims 49 to 58, wherein the second frame is transmitted via at least one of: unicast, multicast, or broadcast.

60. The method according to any one of claims 49 to 59, wherein, prior to receiving, on the primary channel, the second frame from the AP, the method further comprises:
transmitting a Probe Request frame to the AP.

61. A channel access apparatus, comprising:
a first transmitting module, configured to transmit, on a primary channel, a first frame to a first station, STA, wherein the first frame is configured to instruct the first STA to switch from the primary channel to a first secondary channel.

62. A channel access apparatus, comprising:
a second receiving module, configured to receive, on a primary channel, a first frame from an access point, AP, wherein the first frame is configured to instruct a first station, STA, to switch from the primary channel to a first secondary channel.

63. A channel access apparatus, comprising:
a third receiving module, configured to receive, on a primary channel, a second frame from an access point, AP, wherein the second frame is configured to instruct a second station, STA, to switch from the primary channel to a second secondary channel.

64. A wireless device, comprising:
a processor;
a transceiver connected to the processor; and
a memory for storing one or more instructions executable by the processor;
wherein the processor is configured to load and execute the one or more instructions to perform the channel switching method as defined in any one of claims 1 to 32, or claims 33 to 48, or claims 49 to 60.

65. A computer-readable storage medium, storing one or more executable instructions, wherein the one or more executable instructions, when loaded and executed by a processor, causes the processor to perform the channel switching method as defined in any one of claims 1 to 32, or claims 33 to 48, or claims 49 to 60.

66. A chip, comprising a programmable logic circuit or a program, wherein the chip is configured to perform the channel switching method as defined in any one of claims 1 to 32, or claims 33 to 48, or claims 49 to 60.

67. A computer program product, comprising one or more computer instructions stored in a computer-readable storage medium, wherein the one or more computer instructions, when read from the computer-readable storage medium and executed by a processor of a computer device, cause the computer device to perform the channel switching method as defined in any one of claims 1 to 32, or claims 33 to 48, or claims 49 to 60.

68. A computer program, comprising one or more computer instructions, wherein the one or more computer instructions, when loaded and executed by a processor of a computer device, causes the computer device to perform the channel switching method as defined in any one of claims 1 to 32, or claims 33 to 48, or claims 49 to 60.
